# EUROPÄISCHE PATENTSCHRIFT

(11) **EP 1 859 981 B1**
(45) Veröffentlichungstag und Bekanntmachung des Hinweises auf die Patenterteilung: **27.07.2011**
(21) Anmeldenummer: 07008770.5
(22) Anmeldetag: 11.04.2003
(51) Int. Cl.: B60J 7/14, B60J 7/20, B60J 7/08

(54) **Faltverdeck für ein Cabriolet-Fahrzeug**
Foldable roof for a convertible vehicle
Toit pliant pour un véhicule cabriolet

(30) Priorität: 12.04.2002 DE 10216401; 24.04.2002 DE 10218410; 03.07.2002 DE 10229808; 16.09.2002 DE 10243085
(43) Veröffentlichungstag der Anmeldung: 28.11.2007
(62) Teilanmeldung aus: 03724864.8
(73) Patentinhaber: Webasto-Edscha Cabrio GmbH, 82131 Stockdorf (DE)
(72) Erfinder: Obendiek, Klaus, 94032 Passau (DE)
(74) Vertreter: Sparing, Rolf Klaus

(56) Entgegenhaltungen:
- EP-A- 1 308 333
- US-A- 5 769 483
- US-A1- 2001 019 213

## Beschreibung

Die Erfindung betrifft ein Verdeck für ein Cabriolet-Fahrzeug. Ein Verdeck dieser Art ist aus der US 5 769 483 A bekannt.

Im modernen Bau von aus mehreren festen Dachtellen bestehenden, automatisch in einem Heckbereich des Fahrzeugs ablegbaren Cabriolet-Verdecken tritt allgemein die Problematik einer großen Anzahl von zueinander bewegten Teilen auf. Um in dem Heckbereich einen Ablageraum für das Verdeck im Zuge einer Öffnungsbewegung freizugeben, wird häufig ein entgegen der Fahrtrichtung aufschwenkbares Heckelement verwendet, wobei zur Erreichung eines kollisionsfreien Bewegungsablaufs eine vor dem Heckelement angeordnete Hutablage separat verschwenkbar vorgesehen ist. Das Verschwenken der Hutablage ermöglicht dabei die Bewegung des hinteren Dachteils in den Ablageraum.

DE 44 35 222 C1 beschreibt ein Verdeck, bei dem das hintere Dachtell zunächst in Fahrtrichtung aufgeschwenkt wird, wonach das Heckelement entgegen der Fahrrichtung geöffnet werden kann, ohne daß notwendig eine separat verschwenkbare Hutablage vorzusehen ist. Nachteilig bei der gezeigten Lösung ist dabei, daß sowohl das hintere Dachteil als auch ein sich in Fahrtrichtung daran anschließendes mittleres Dachteil jeweils separat an der Karosserie des Fahrzeugs angelenkt sind. Um bei der Verschwenkung in Fahrtrichtung nicht mit dem mittleren Dachteil zu kollidieren, umfassen die Anlenkungen des hinteren Dachteils ausfahrbare Hydraulikzylinder, um das hintere Dachteil über das mittlere Dachteil zu heben. Eine solche Ansteuerung ist nicht nur aufwendig und kostspielig, sondern auch störanfällig. Zudem sind weitere Mittel zur Fixierung des hinteren Dachteils in einem geschlossenen Verdeckzustand notwendig, da die zugleich tragende Lenker des Dachteils bildenden Hydraulikzylinder nicht ohne weiteres in ihrer Längsrichtung starr sind. Um auf eine noch größere Anzahl von Antriebseinrichtungen zu verzichten, wird vorgeschlagen, das hintere Dachteil in einer über das mittlere Dachteil verschwenkten Position mit diesem zu verriegeln. Hinsichtlich einer automatisierten Verdecköffnung sind aber auch hierfür aufwendige hydraulische oder elektromechanische Mittel erforderlich.

DE 100 06 296 C1 beschreibt ein dreiteiliges Hartschalen-Klappverdeck für ein Cabrlolet-Fahrzeug, bei dem ein mittleres Dachteil mittels eines Lenkergetriebes mit einer Karosserie des Fahrzeugs verbunden ist, wobei sowohl ein vorderes als auch ein hinteres Dachteil über Lenkergetriebe jeweils an dem mittleren Dachteil aufgenommen sind, und wobei das vordere Dachteil über das mittlere Dachteil bewegbar ist und wobei das hintere Dachteil unter das vordere und über das mittlere Dachteil bewegbar ist. Eine solche Anordnung bietet eine ungünstige Stapelung der Dachteile und ist, wenn überhaupt, nur in dem gezeigten Fall der im wesentlichen ebenen Dachteile realisierbar. Umfaßt etwa das hintere Dachteil C-Säulen des Fahrzeugs oder sollen die Dachteile in anderer Abfolge gestapelt werden, so stößt die technische Realisierung zumindest dann schnell auf Grenzen, wenn ein möglichst großer Anteil der Dachteilbewegungen zwangsgesteuert miteinander in Beziehung stehen.

Es ist die Aufgabe der Erfindung, ein eingangs genanntes Verdeck dahingehend zu verbessern, daß die Kinematik des Verdecks besonders einfach ausgebildet ist.

Diese Aufgabe wird erfindungsgemäß durch die Merkmale des Anspruchs 1 gelöst.

Durch die bewegbare Aufnahme des ersten Dachteils an dem zweiten Dachteil wird auf einfache Weise erreicht, daß das erste Dachteil in Fahrtrichtung über das zweite Dachteil verschwenkbar ist, ohne daß besondere Maßnahmen wie etwa als hydraulische Zylinder ausgebildete Lenker zur Anhebung des ersten Dachteils erforderlich sind.

Durch die Möglichkeit, das dritte Dachteil über das zweite Dachteil zu verlagern, wird vorteilhaft erreicht, daß ein erfindungsgemäßes Verdeck drei vollständige Dachteile umfassen kann, wobei eine besonders raumsparende Reihenfolge der Stapelung der Dachteile ermöglicht ist.

Durch die Möglichkeit, das dritte Dachteil und das erste Dachteil mittels einer Zwangssteuerung miteinander zu verbinden, wird vorteilhaft erreicht, daß die erforderliche Anzahl von separaten Antriebsvorrichtungen verringert wird.

Durch ein erfindungsgemäßes Verdeck wird zudem erreicht, daß eine Öffnungsbewegung des zweiten oder des dritten Dachteils beginnen kann, bevor das erste Dachteil vollständig über das zweite Dachteil bewegt wurde, so daß insgesamt eine besonders zeitsparende Öffnungsbewegung realisierbar ist.

Vorteilhaft ist bei einem erfindungsgemäßen Verdeck in einer geöffneten Verdeckposition das dritte Dachteil über dem zweiten Dachteil und das erste Dachteil über dem dritten Dachteil angeordnet. Hierdurch wird eine besonders raumsparende Reihenfolge der Stapelung dreier Dachteile eines erfindungsgemäßen Verdecks erreicht.

Vorteilhaft ist das Heckelement entgegen der Fahrtrichtung aufschwenkbar, so daß eine Freigabe eines heckseitigen Stauraums auf einfache und bekannte Weise erfolgen kann. Alternativ kann das Heckelement aber auch durch eine anders geartete Bewegung, wie etwa eine Verschiebung oder ein seitliches Aufklappen, geöffnet werden, da nach einem Abheben des ersten Dachteils von dem Heckelement eine weitgehende Bewegungsfreiheit für das Heckelement gegeben ist.

Vorteilhaft erfolgt das Abheben des ersten Dachteils von dem Heckelement in einem ersten Abschnitt einer Verdecköffnungsbewegung. Hierdurch kann etwa eine Paketbildung der Dachteile und ein Aufschwenken des Heckelements simultan erfolgen, wodurch die Zeitdauer der Verdecköffnugnsbewegung insgesamt klein gehalten werden kann.

Weiterhin vorteilhaft liegt das erste Dachteil in einem geschlossenen Verdeckzustand dichtend von oben auf dem Heckelement auf. Dies ermöglicht eine besonders einfache Abdichtung des ersten Dachteils gegenüber dem Fahrzeug bzw. dem Heckelement.

Weiterhin vorteilhaft ist das dritte Dachteil im wesentlichen parallel über das zweite Dachteil verschwenkbar, wodurch eine einfache technische Realisierung der Bewegung des dritten Dachteils gegenüber dem zweiten Dachteil, etwa mittels eines Viergelenks oder einer Linearführung, ermöglicht ist.

Weiterhin vorteilhaft ist das dritte Dachteil in einem geschlossenen Verdeckzustand an einem Frontscheibenrahmen des Fahrzeugs lösbar festlegbar Dachteil ausgebildet, wodurch ein besonders großes, auch vier- und mehrsitzige Limousinen überdeckendes Cabriolet-Verdeck ausbildbar ist.

In einer ersten bevorzugten Ausführungsform eines erfindungsgemäßen Verdecks ist das erste Dachteil mittels eines ersten Dachteillenkers und eines zweiten Dachteillenkers an einem mit dem zweiten Dachteil fest verbundenen Koppellenker angelenkt, wobei das erste Dachteil, der erste Dachteillenker, der zweite Dachteillenker und der Koppellenker ein Dachteil-Viergelenk ausbilden. Durch diese Anlenkung des ersten Dachteils an dem zweiten Dachteil mittels eines Viergelenks ist eine Höhenverlagerung des ersten Dachteils bei einem Aufschwenken in Fahrtrichtung bereits in einem ersten Bewegungsabschnitt besonders einfach erreichbar.

Besonders bevorzugt ist dabei das Dachteil-Viergelenk mittels einer Antriebsvorrichtung gegenüber dem zweiten Dachteil antreibbar verschwenkbar, wodurch ein vollautomatisches Öffnen bzw. Schließen des Verdecks ermöglicht ist.

Besonders bevorzugt ist dabel das dritte Dachteil über einen ersten Frontlenker und einen zweiten Frontlenker gelenkig mit dem Koppellenker verbunden, so daß durch den Koppellenker, den ersten Frontlenker, den zweiten Frontlenker und das dritte Dachteil ein vorderes Viergelenk ausgebildet, wodurch das dritte Dachteil auf einfache Weise in eine zwangsgesteuerte Öffnungs- oder Schließbewegung des erfindungsgemäßen Verdecks einbeziehbar ist.

Besonders bevorzugt verbindet ein Steuerlenker das vordere Viergelenk und das Dachteil-Viergelenk gelenkig miteinander, wobei durch das vordere Viergelenk, das Dachteil-Viergelenk und den Steuerlenker eine erste zwangsgesteuerte Lenkerkette ausgebildet ist. Hierdurch sind das hintere, erste Dachteil und das vordere, dritte Dachteil mittels einer gemeinsamen Antriebsvorrichtung zueinander und relativ zu dem zweiten, mittleren Dachteil verschwenkbar. Bevorzugt wird dabei durch die erste zwangsgesteuerte Lenkerkette eine jeweils entgegengesetzte Zwangsbewegung des ersten Dachteils und des dritten Dachteils bestimmt, so daß sich das erste Dachteil und das dritte Dachteil über dem zweiten Dachteil zu einem kompakten Paket zusammenfinden. Dabei ist diese Paketbildung besonders bevorzugt so ausgelegt, daß das dritte Dachtell in einer abgelegten Verdeckstellung unterhalb des ersten Dachteils und oberhalb des zweiten Dachteils zu liegen kommt. In dieser Reihenfolge der Anordnung der abgelegten Dachteile wird besonders wenig Raum beansprucht, da das dritte, vordere Dachteil im allgemeinen die geringste Bauhöhe der drei Dachteile aufweist und somit besonders gut in einem Raum unterzubringen ist, der zwischen dem ersten Dachteil und dem zweiten Dachteil verbleibt. Dabei befinden sich die Dachteile in dieser Paketstellung jeweils in gleicher Orientierung mit jeweils gleichgerichteter Wölbung.

Besonders bevorzugt ist ein erster Hauptlenker und ein zweiter Hauptlenker vorgesehen, wobei der erste Hauptlenker und der zweite Hauptlenker jeweils mit einer karosseriefesten Hauptlagereinheit gelenkig verbunden sind, wobei das zweite Dachteil den ersten Hauptlenker und den zweiten Hauptlenker gelenkig zu einem eine zweite zwangsgesteuerte Lenkerkette ausbildendem Hauptlenkergetriebe, insbesondere einem Hauptviergelenk, verbindet. Auf diese Weise besteht die karosserieseitige Anbindung des gesamten Verdecks nur aus den beiden Hauptienkern. Vorteilhaft wird somit bei einer Öffnungsbewegung des Verdecks zunächst ein Paket der drei Dachteile gebildet, wonach dieses Paket durch eine Verschwenkung des Hauptviergelenks auf einfache Weise in einen Heckbereich des Fahrzeugs zur Ablage verschwenkbar ist. Besonders bevorzugt ist das Hauptviergelenk dabei mittels einer vorgesehenen Krafteinleitungseinheit antreibar verschwenkbar. In einer systemanalytischen Betrachtung liegt somit besonders bevorzugt ein Verdeck vor, bei dem zwei separat antreibbare zwangsgesteuerte Lenkerketten vorhanden sind, wobei die erste Lenkerkette auf der zweiten Lenkerkette gelagert ist und lediglich die zweite Lenkerkette mit der Fahrzeugkarosserie unmittelbar verbunden ist. Hierdurch ergibt sich unter anderem der Vorteil, daß die Anlenkung des gesamten Verdecks an der Karosserie des Fahrzeugs in einem kleinen Bereich vorgesehen sein kann, so daß eine Ausbildung des Anlenkungsbereichs als modulartiges Hauptlager des Verdecks ermöglicht wird.

Besonders bevorzugt ist ein entgegen der Fahrtrichtung aufschwenkbares Heckelement vorgesehen, wobei das erste Dachteil in einem geschlossenen Verdeckzustand auf dem Heckelement dichtend aufliegt. Dies bedeutet vorteilhaft, daß auf eine separat verschwenkbare Hutablage verzichtet werden kann, so daß die Hutablage lediglich als fester, vorderer Bereich des Heckelements ausbildbar ist.

Besonders bevorzugt umfaßt das erste Dachteil eine feste Heckscheibe.

Bei einem erfindungsgemäßen Verdeck wird das erste Dachteil zunächst um eine Drehachse in Fahrtrichtung aufgeschwenkt, wobei die Drehachse in einem heckseitigen Endbereich des zweiten Dachteils angeordnet ist. Hierdurch wird vorteilhaft ein besonders ansprechender Bewegungsablauf einer Verdecköffnungsbewegung erreicht.

Bevorzugt ist ein antreibbarer Basislenker an dem zweiten Dachteil bewegbar aufgenommen, wobei der Basislenker die Basis eines Dachteilviergelenks bildet, wobei zudem ein erster Dachteillenker und ein zweiter Dachteillenker vorgesehen sind und das erste Dachteil die Koppel des Dachteil-Viergelenks bildet. Zudem verbindet ein Steuerlenker einen der Dachteillenker mit einem Hauptlenker des Verdecks gelenkig. Auf diese Weise wird vorteilhaft erreicht, daß sowohl eine separate Ansteuerung des Dachteil-Viergelenks über den antreibbaren Basislenker vorliegt als auch das Dachteil-Viergelenk und somit das erste Dachteil zwangsgesteuert in die weitere Lenkerkette des Verdecks eingebunden ist.

Besonders bevorzugt ist ein drittes, in einem geschlossenen Verdeckzustand an einem Frontscheibenrahmen des Fahrzeugs lösbar festlegbares Dachteil vorgesehen, wobei das dritte Dachteil an dem zweiten Dachtell über eine Schiebeführung bewegbar aufgenommen ist. Hierdurch wird auf einfache Weise ermöglicht, daß ein erfindungsgemäßes Verdeck auch für besonders große Passagierräume eingesetzt werden kann.

In einer weiteren bevorzugten Ausführungsform eines Verdecks ist vorteilhaft in einer zwangsgesteuerten Verbindung des ersten, insbesondere hinteren Dachteils und des dritten, insbesondere vorderen Dachteils zudem eine mechanische Steuervorrichtung vorgesehen, so daß zum einen die Dachteile mittels nur einer einzigen Antriebsvorrichtung simultan bewegt werden können, und zum anderen mittels der mechanischen Steuervorrichtung eine Koordinierung der Bewegung der Dachteile, insbesondere eine zeitlich sequentielle oder quasi-sequentielle Abfolge der einzelnen Bewegungen ohne das Erfordernis zusätzlicher Antriebe ermöglicht ist. Insbesondere ist durch den Verzicht auf zusätzliche Antriebe neben der Kosteneinsparung eine geringere Störanfälligkeit der Gesamtmechanik des Verdecks gewährleistet.

Bevorzugt umfaßt die Steuervorrichtung einen Drehlenker, Auf besonders bevorzugte Weise treibt eine einzelne Krafteinleltungseinheit den Drehlenker an, und der Drehlenker ist über ein erstes Gestänge mit dem dritten Dachteil und über ein zweites Gestänge mit dem ersten Dachteil verbunden. Auf diese Weise läßt sich ein gegebener Weg der Krafteinleitungseinheit nach dem Prinzip einer projizierten Kreisbewegung auf das erste bzw. das zweite Gestänge jeweils phasenverschoben übertragen. So kann etwa, ausgehend von einer geschlossenen Verdeckstellung, zunächst ein Antrieb des ersten Gestänges und somit des dritten Dachteils erfolgen, wogegen das zweite Gestänge und somit das erste Dachteil erst nach einer erfolgten Verdrehung des Drehlenkers merklich angetrieben wird. Wird die Winkelstellung alpha des Drehlenkers in der Ausgangsstellung als null Grad bezeichnet, so kann, in erster Näherung, ein erreichbarer Faktor bei der Übertragung des Bewegungshubs für das erste Gestänge proportional zu sinus (alpha + delta) und der Faktor der Übertragung des Bewegungshubs für das zweite Gestänge proportional zu sinus (alpha + delta + phi) sein, wobei die Phasenverschiebung phi bevorzugt in der Größenordnung von neunzig Grad ist und delta ein konstanter, vorgegebener Ursprungswinkel ist. Delta kann bevorzugt von null abweichen und insbesondere etwas kleiner als null sein, damit zu Anfang des Bewegungsvorgangs möglichst lange eine großer Übertragungsfaktor für das erste Gestänge gegeben ist.

Besonders bevorzugt ist das erste Dachteil ein hinteres Dachteil und das dritte Dachteil ein vorderes Dachteil des Verdecks, wobei ein zweites, mittleres Dachteil in einem geschlossenen Verdeckzustand zwischen dem ersten Dachteil und dem dritten Dachteil angeordnet ist. Dabel ist bevorzugt das dritte Dachteil über ein vorderes Viergelenk mit dem mittleren Dachteil verbunden und das erste Dachteil ist über ein hinteres Viergelenk mit dem mittleren Dachteil verbunden. Insbesondere bei der hierbei vorliegenden entgegengesetzten Bewegung des ersten Dachteils gegenüber dem dritten Dachteil, die bedingt durch die Viergelenke zudem besonders raumgreifend ausfällt, ist die erfindungsgemäße Vorsehung der mechanischen Steuervorrichtung vorteilhaft, da hierdurch eine besonders große Freiheit bei der Dimensionierung der Dachtelle und bei der Auslegung der Wegkurven der Dachteile erreichbar ist.

Vorteilhaft kann das mittlere Dachteil über ein Hauptlenkergetriebe, insbesondere ein Hauptviergelenk mit der Karosserie des Fahrzeugs verbunden sein, so daß während oder nach einer Verschwenkung des ersten und des dritten Dachteils über das mittlere Dachteil eine gemeinsame Verschwenkung der zu einem Paket angeordneten Dachteile in einen heckseitigen Ablagebereich mittels des Hauptlenkergetriebes erfolgen kann.

Besonders vorteilhaft liegt zumindest ein Lenker des vorderen Viergelenks in einem geschlossenen Verdeckzustand außenseitig an dem mittleren Dachteil an. Hierdurch ist hinsichtlich einer raumsparenden Ablage des geöffneten Verdecks vorteilhaft erreicht, daß ein die Ansteuerung des dritten, vorderen Dachteils tragender Lenker besonders kurz ausgelegt sein kann, da der außenseitige Lenker des vorderen Viergelenks eine relativ zu dem mittleren Dachteil weitgehend zurückverlagerte Anordnung des vorderen Viergelenks erlaubt. Insbesondere führt diese Vorsehung des außenliegenden Lenkers aber auch zu einem sehr vorteilhaften Einsatz der Steuervorrichtung, da letztlich durch den außenliegenden Lenker eine besonders raumgreifende Verschwenkung des ersten Dachteils bedingt ist, die ohne die Steuervorrichtung bei einem bevorzugten Verdeck zu einer Kollision mit dem dritten, hinteren Dachteil führen würde.

Das dritte Dachteil eines erfindungsgemäßen Verdecks eines Cabriolet-Fahrzeugs ist bevorzugt ein hartes Schalenteil, das sich quer zur Fahrtrichtung über die gesamte Breite des Fahrzeugs erstreckt. Hierdurch kann auf eine aufwendige Unterteilung des dritten Dachteils, etwa in quer zur Fahrtrichtung verschwenkbare seitliche Rahmenteile und ein zentrales Schiebedach, verzichtet werden, so daß ein erfindungsgemäßes Verdeck weniger Fugen und eine einfachere Mechanik aufweist. Ein aus dem Stand der Technik an sich bekanntes Schiebedach kann dabei, falls gewünscht, durchaus in der Fläche des dritten Dachteils integriert sein.

Weitere Vorteile und Merkmale des erfindungsgemäßen Verdecks ergeben sich aus den nachfolgend beschriebenen Ausführungsbeispielen sowie aus den abhängigen Ansprüchen.

Nachfolgend wird ein bevorzugtes Ausführungsbeispiel eines erfindungsgemäßen Verdecks beschrieben und anhand der anliegenden Zeichnungen näher erläutert.
- Fig. 1: zeigt eine schematische Ansicht ersten Ausführungsbeispiels eines nicht erfindungsgemäßen Verdecks in einem geschlossenen Verdeckzustand in einer Draufsicht von der Seite.
- Fig. 2: zeigt das Verdeck aus Fig, 1 in einem ersten Schritt einer Verdecköffnungsbewegung.
- Fig, 3: zeigt das Verdeck aus Fig. 1 in einem zweiten Schritt einer Verdecköffnungsbewegu ng.
- Fig. 4: zeigt das Verdeck aus Fig. 1 in einem dritten Schritt einer Verdecköffnungsbewegung.
- Fig. 5: zeigt das Verdeck aus Fig. 1 in einem vierten Schritt einer Verdecköffnungsbewegung.
- Fig. 6: zeigt das Verdeck aus Fig. 1 in einem vollständig geöffneten Zustand bei geöffnetem Heckdeckel.
- Fig. 7: zeigt das Verdeck aus Fig. 6 bei geschlossenem Heckdeckel.
- Fig. 8: zeigt eine Teilansicht des Verdecks aus Fig. 1, wobei zur besseren Erkennbarkeit der Mechanik das zweite Dachteil nicht dargestellt wurde, und wobei eine Antriebseinheit des ersten Dachteils detailliert gezeigt ist.
- Fig. 9: zeigt das Verdeck aus Fig. 8 in einem ersten Schritt einer Verdecköffnungsbewegung.
- Fig. 10: zeigt das Verdeck aus Fig. 8 in einem zweiten Schritt einer Verdecköffnungsbewegung.
- Fig. 11: zeigt eine schematische Ansicht eines zweiten Ausführungsbeispiels eines erfindungsgemäßen Verdecks in einem geschlossenen Verdeckzustand in einer Draufsicht von der Seite.
- Fig. 12: zeigt das Verdeck aus Fig. 11 in einem ersten Schritt einer Verdecköffnungsbewegung.
- Fig. 13: zeigt das Verdeck aus Fig. 11 in einem zweiten Schritt einer Verdecköffnungsbewegung,
- Fig. 14: zeigt das Verdeck aus Fig, 11 In einem dritten Schritt einer Verdecköffnungsbewegung,
- Fig. 15: zeigt das Verdeck aus Fig. 11 in einem vierten Schritt einer Verdecköffnungsbewegung.
- Fig. 16: zeigt das Verdeck aus Fig. 11 in einem fünften Schritt einer Verdecköffnungsbewegung,
- Fig. 17: zeigt das Verdeck aus Fig. 11 in einem sechsten Schritt einer Verdecköffnungsbewegung.
- Fig. 18: zeigt das Verdeck aus Fig. 11 in einem vollständig geöffneten Zustand bei geöffnetem Heckdeckel.
- Fig. 19: zeigt das Verdeck aus Fig. 18 bel geschlossenem Heckdeckel,
- Fig. 20: zeigt eine Teilansicht des Verdecks aus Fig. 11.
- Fig. 21: zeigt das Verdeck aus Fig. 20 in einem ersten Schritt einer Verdecköffnungsbewegung.
- Fig. 22: zeigt das Verdeck aus Fig. 20 in einem zweiten Schritt einer Verdecköffnungsbewegung,
- Fig. 23: zeigt das Verdeck aus Fig. 20 in einem dritten Schritt einer Verdecköffnungsbewegung.
- Fig. 24: zeigt das Verdeck aus Fig. 20 in einem vollständig geöffneten und in einem Heckbereich des Fahrzeugs abgelegten Zustand.
- Fig. 25: zeigt eine schematische Teilansicht eines dritten Ausführungsbeispiels eines nicht erfindungsgemäßen Verdecks von der Seite in einer geschlossenen Verdeckstellung.
- Fig. 26: zeigt das Verdeck aus Fig, 25 in einer die Zusammenwirkung der Bauteile verdeutlichenden Prinzipdarstellung.
- Fig. 27: zeigt eine schematische Teilansicht des dritten Ausführungsbeispiels eines Verdecks von der Seite in einem ersten Schritt einer Öffnungsbewegung.
- Fig. 28: zeigt das Verdeck aus Fig. 27 in einer die Zusammenwirkung der Bauteile verdeutlichenden Prinzipdarstellung.
- Fig. 29: zeigt eine schematische Teilansicht des dritten Ausführungsbeispiels eines Verdecks von der Seite in einem zweiten Schritt einer Öffnungsbewegung.
- Fig. 30: zeigt das Verdeck aus Fig. 29 in einer die Zusammenwirkung der Bauteile verdeutlichenden Prinzipdarstellung.
- Fig. 31: zeigt eine schematische Teilansicht des dritten Ausführungsbeispiels eines Verdecks von der Seite in einem dritten Schritt einer Öffnungsbewegung.
- Fig. 32: zeigt das Verdeck aus Fig. 31 in einer die Zusammenwirkung der Bauteile verdeutlichenden Prinzipdarstellung.
- Fig. 33: zeigt eine schematische Teilansicht des dritten Ausführungsbeispiels eines Verdecks von der Seite in einem vierten Schritt einer Öffnungsbewegung.
- Fig. 34: zeigt das Verdeck aus Fig. 33 in einer die Zusammenwirkung der Bauteile verdeutlichenden Prinzipdarstellung.
- Fig. 35: zeigt eine seitliche Gesamtansicht des Verdecks aus Fig. 25.
- Fig. 36: zeigt eine seitliche Gesamtansicht des Verdecks aus Fig. 33.
- Fig. 37: zeigt das Verdeck aus Fig. 36 in einem weiteren Schritt einer Öffnungsbewegung.
- Fig. 38: zeigt das Verdeck aus Fig. 36 in einem vollständig geöffneten und in einem Heckbereich des Fahrzeugs abgelegten Zustand.
- Fig. 39: zeigt eine Detailansicht eines außenliegenden Lenkers des dritten Ausführungsbeispiels eines Verdecks in einer geschlossenen Verdeckstellung.
- Fig. 40: zeigt die Detailansicht aus Fig. 39 in einer teilweise geöffneten Stellung.
- Fig. 41: zeigt die Detailansicht aus Fig. 39 in einer vollständig geöffneten Stellung bei maximal verschwenktem außenliegenden Lenker.

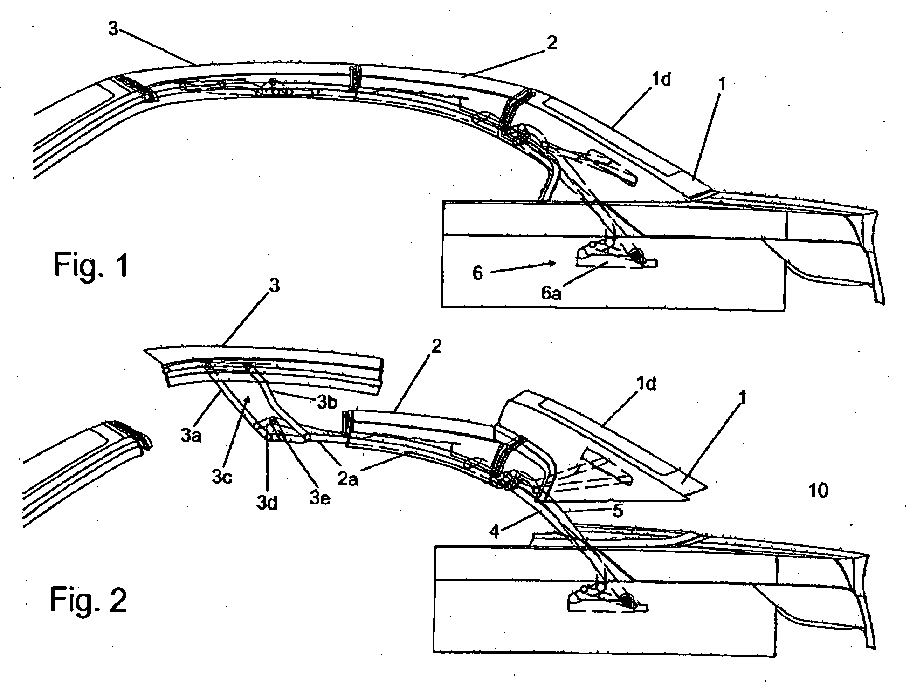

Wie Fig. 1 zeigt, umfaßt ein erstes bevorzugtes Ausführungsbeispiel eines Verdecks ein erstes, hinteres Dachteil 1, ein zweites, mittleres Dachteil 2 und ein drittes, vorderes Dachteil 3, die als feste Schalenteile ausgebildet sind und in einem geschlossenen Verdeckzustand einen Passagierraum des Fahrzeugs vollständig überdecken. Das dritte Dachteil 3 ist dabei an einem Frontscheibenrahmen 7 des Fahrzeugs lösbar festgelegt. Das erste Dachteil 1 umfaßt C-Säulen des Fahrzeugs sowie eine feste Heckscheibe 1d.

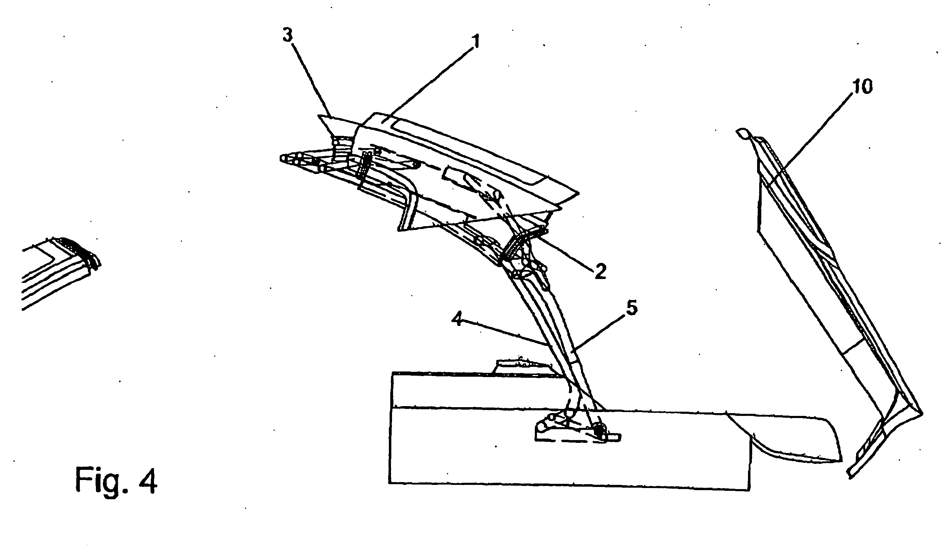

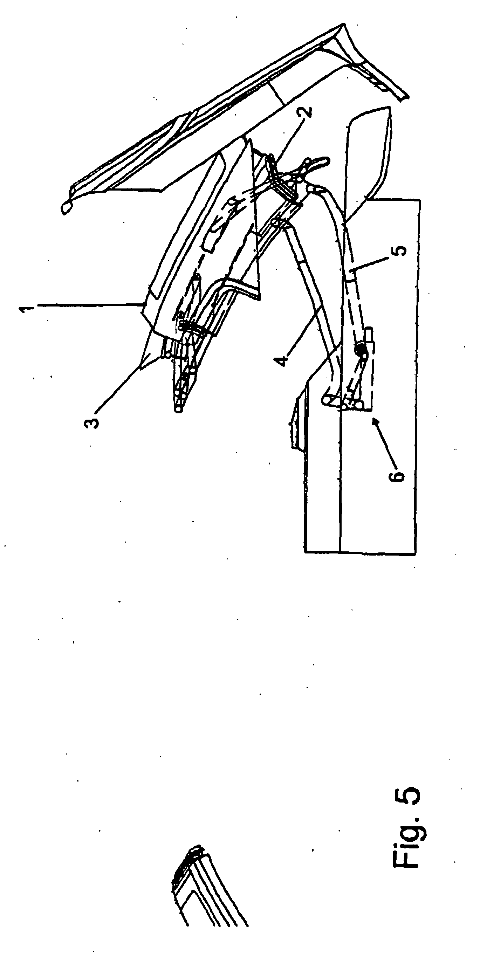

Heckseitig sowie unterhalb des ersten Dachteils 1 ist ein entgegen der Fahrtrichtung aufschwenkbares Heckelement 10 ausgebildet (siehe auch Flg. 2 bis Fig. 7)

Das zweite Dachteil 2 umfaßt ein festes Schalenteil sowie einen mit dem Schalenteil fest verbundenen Koppellenker 2a, der sowohl front- als auch heckseitig über das Schalenteil hinausragt. Ein erster Hauptlenker 4 und ein zweiter Hauptlenker 5 sind jeweils einenends mit dem Koppellenker 2a und andernends mit einer an der Karosserie des Fahrzeugs festgelegten Hauptlagereinheit 6 gelenkig verbunden, so daß durch den Koppellenker 2a, die Hauptlenker 4, 5 und die Hauptlagereinheit 6 ein Hauptviergelenk 9 ausgebildet ist. Im Bereich der Hauptlagereinheit 6 ist eine als rotatorischer Hydraulikzylinder ausgebildete Krafteinleitungseinheit 6a vorgesehen, so daß das Hauptviergelenk 9 mittels der Krafteinleitungseinheit 6a antreibbar verschwenkbar ist.

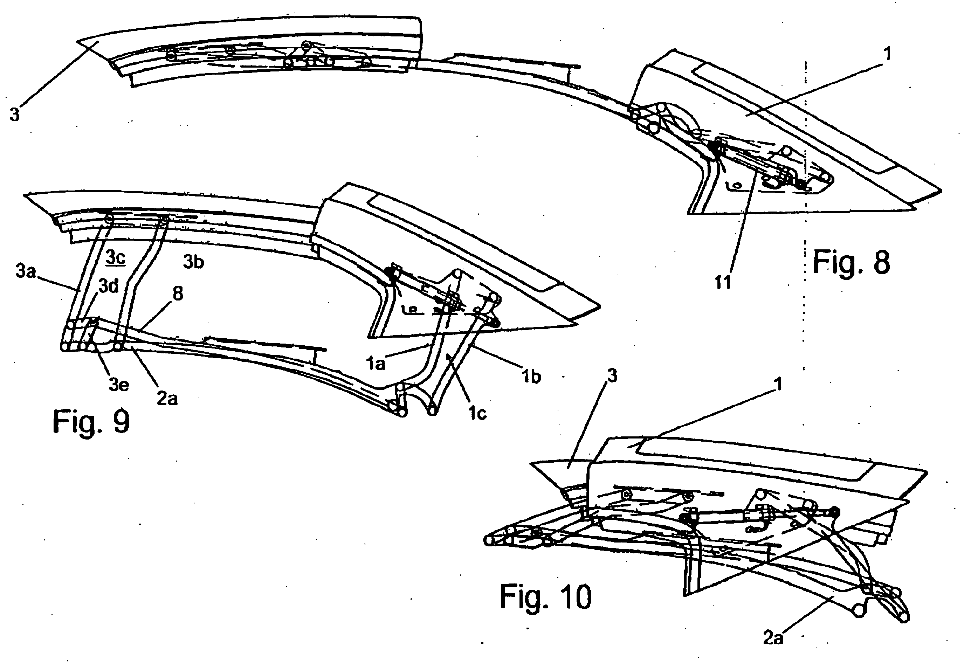

Wie insbesondere auch Fig. 8 bis Fig. 10 zeigen, ist das erste Dachteil mittels eines ersten Dachteillenkers 1a und eines zweiten Dachteillenkers 1b mit dem Koppellenker 2a verbunden, so daß durch den Koppellenker 2a, die beiden Dachteillenker 1a, 1b und das erste Dachteil 1 insgesamt ein Dachteil-Viergelenk 1c ausgebildet ist. Dabei ist eine antreibbare Verschwenkung des Dachteil-Viergelenks 1c dadurch ermöglicht, daß eine als hydraulischer Linearzylinder ausgebildete Antriebsvorrichtung 11 einerseits an dem ersten Dachteillenker 1a und andererseits an dem zweiten Dachteillenker 1b abgestützt ist. Durch ein Ausfahren- bzw. Einfahren des Zylinders wird somit der Abstand der Dachteillenker 1a, 1b geändert, was entsprechend eine Verschwenkung des Dachteil-Viergelenks bewirkt.

Auf ähnliche Weise ist das dritte Dachteil 3 mittels eines ersten Frontlenkers 3a und eines zweiten Frontlenkers 3b jeweils gelenkig mit dem Koppellenker 2a verbunden, wobei die Frontlenker andernendig über das dritte Dachteil 3 miteinander verbunden sind, so daß die Frontlenker 3a, 3b, der Koppellenker 2a und das dritte Dachteil 3 ein vorderes Viergelenk 3c ausbilden.

Das vordere Viergelenk 3c und das Dachteil-Viergelenk 1c sind über einen Steuerlenker 8 miteinander gekoppelt. Dabei ist der Steuerlenker 8 einendig mit einem Fortsatz des ersten Dachteillenkers 1a verbunden. Andernendig ist der Steuerlenker in einem Gelenk mit zwei Zwischenlenkern 3d, 3e verbunden, wobei der eine Zwischenlenker 3d mit dem ersten Frontlenker 3a und der andere Zwischenlenker 3e mit dem Koppellenker 2a verbunden ist. Diese indirekte Ansteuerung des vorderen Viergelenks 3c über die Zwischenlenker 3d, 3e ermöglicht vorteilhaft einen besonders großen Schwenkwinkel des vorderen Viergelenks 3c.

Das vordere Viergelenk 3c, das Dachteil-Viergelenk 1c sowie die Zwischenlenker 3d, 3e, der Steuerlenker 8 und der Koppellenker 2a bilden zusammen eine erste zwangsgesteuerte Lenkerkette aus.

Das zuvor beschriebene Hauptviergelenk 9 wird als eine zweite zwangsgesteuerte Lenkerkette betrachtet. Somit kann die zuvor beschriebene erste zwangsgesteuerte Lenkerkette als auf die zweite zwangsgesteuerte Lenkerkette aufgesetzt betrachtet werden, wobei In diesem Betrachtungsschema der Koppellenker 2a als einziges gemeinsames Element eine Verbindung der beiden Lenkerketten darstellt.

Je nach Auslegung der Hauptlagereinheit kann das Hauptviergelenk 9 auch als komplexere Lenkerkette, etwa als Siebengelenk, ausgelegt sein, insofern man die Karosserie des Fahrzeugs als Lenker betrachtet. Vorliegend wurde daher die Betrachtung gewählt, daß die Hauptlagereinheit 9 einen Lenker mit eventuell veränderlicher Länge und räumlicher Lage darstellt, so daß Hauptlagereinheit 9, die beiden Hauptlenker 4, 5 und der Koppellenker 2a immer ein Viergelenk mit gegebenenfalls einem längenveränderlichen Lenker bilden.

### Das Verdeck funktioniert nun wie folgt:

Ausgehend von der geschlossenen Verdeckposition gemäß Fig, 1 bzw. Fig, 8 werden zunächst das erste Dachteil 1 und das dritte Dachteil 3 mittels der Antriebsvorrichtung 11 bewegt, wobei das erste Dachteil 1 und das dritte Dachteil 3 gemeinsam über das zweite Dachteil 2 schwenken, und wobei das erste Dachteil als oberstes, das dritte Dachteil als mittleres und das zweite Dachteil als unteres Teil eines Paketes aus drei gleichorientierten Dachteilen angeordnet werden (siehe Fig. 1 bis Fig. 4 und Fig. 8 bis Fig. 10).

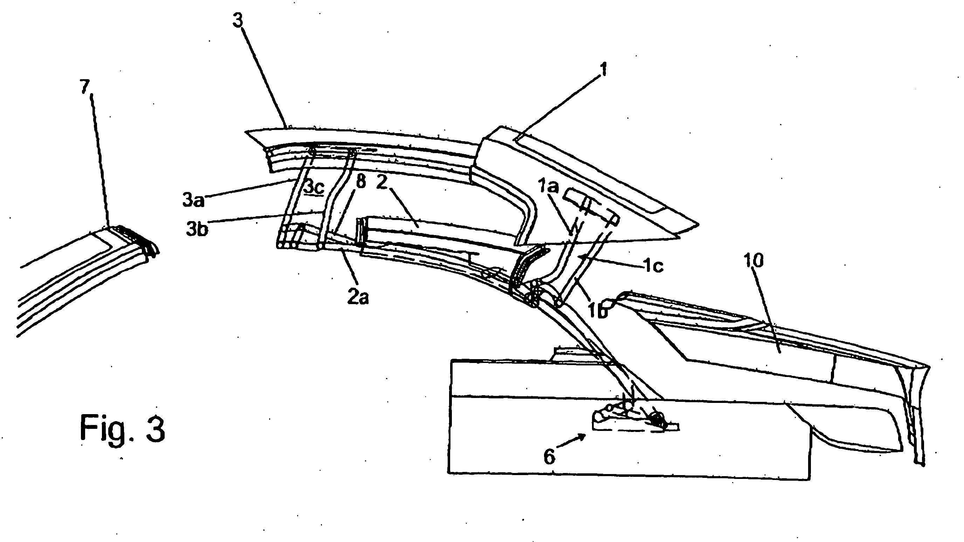

Sobald das erste Dachteil 1 ausreichend weit nach vorne verschwenkt wurde, wird das Heckelement 10 entgegen der Fahrtrichtung aufgeschwenkt, um einen Ablageraum für das Verdeck in einem Heckbereich des Fahrzeugs freizugeben (siehe Fig. 3 bis Fig. 4).

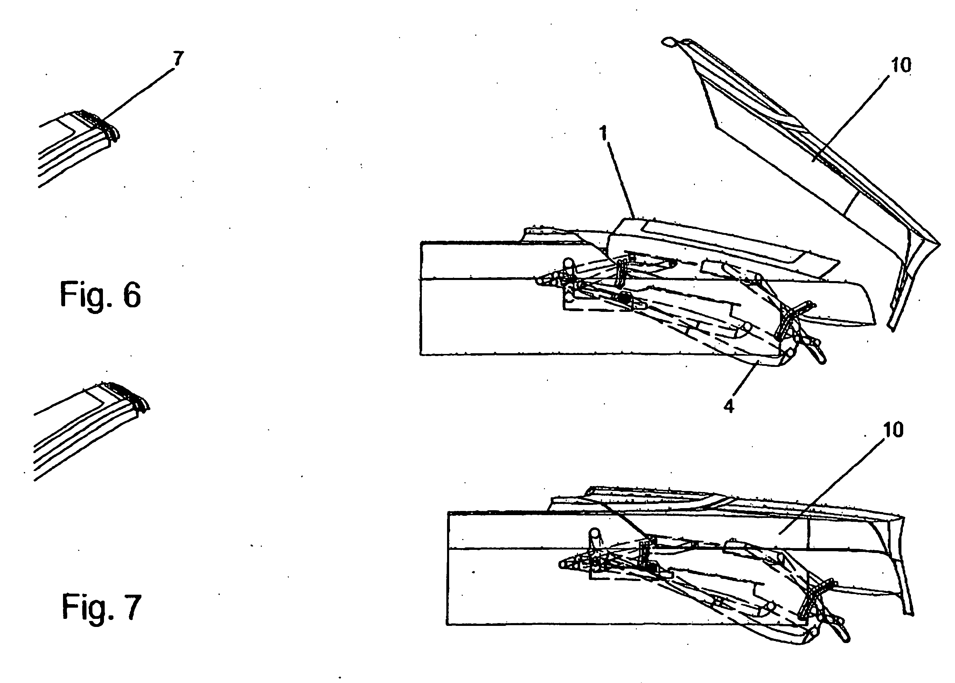

In einem weiteren Schritt einer Verdecköffnungsbewegung kann dann das zuvor beschriebene Paket aus den drei Dachteilen mittels der zweiten zwangsgesteuerten Lenkerkette bzw. dem angetriebenen Hauptvlergelenk 9 in den Heckbereich des Fahrzeugs versenkt werden, wonach das Heckelement wieder geschlossen wird (siehe Fig. .5 bis Fig. 7). Dabei schließt das Heckelement sowohl im geöffneten als auch im geschlossenen Verdeckzustand unmittelbar an eine hintere Begrenzung des Passagierraums an, so daß auf eine separat bewegbare Hutablage verzichtet werden kann,

Die Schließbewegung des Verdecks erfolgt entsprechend in kinematischer Umkehr.

Nachfolgend wird ein zweites Ausführungsbeispiel eines erfindungsgemäßen Verdecks beschrieben:

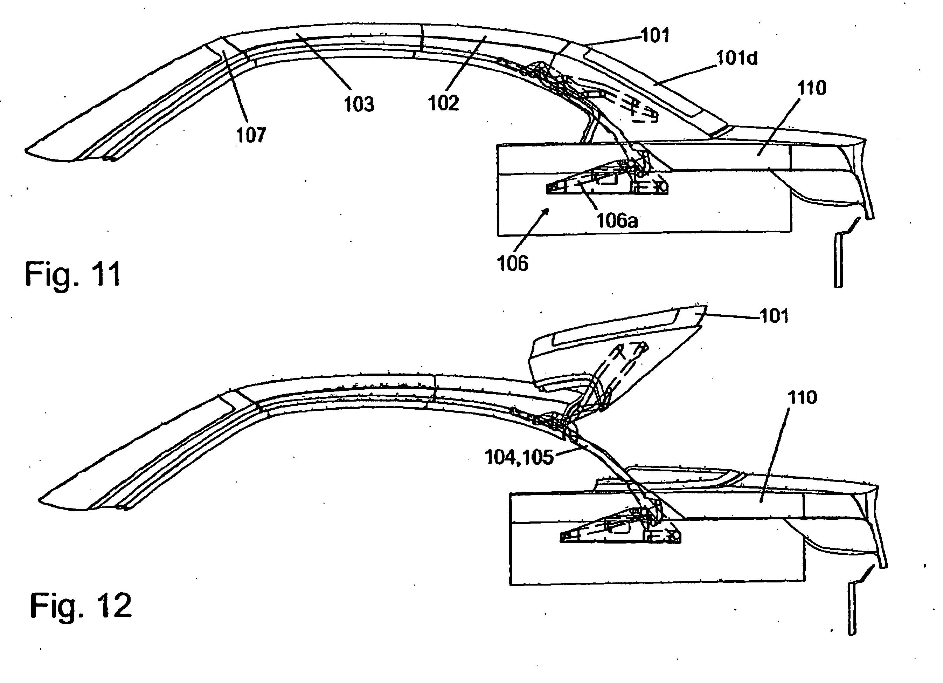

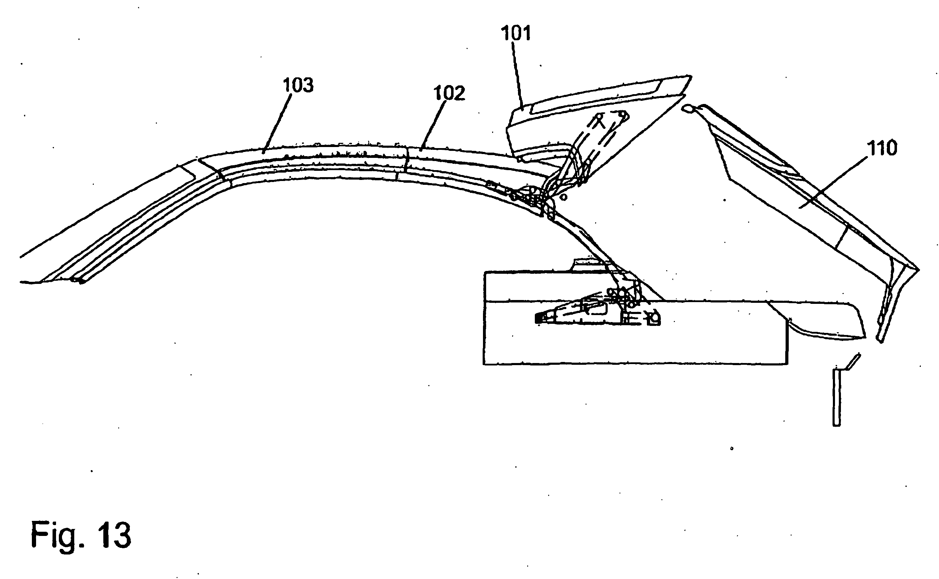

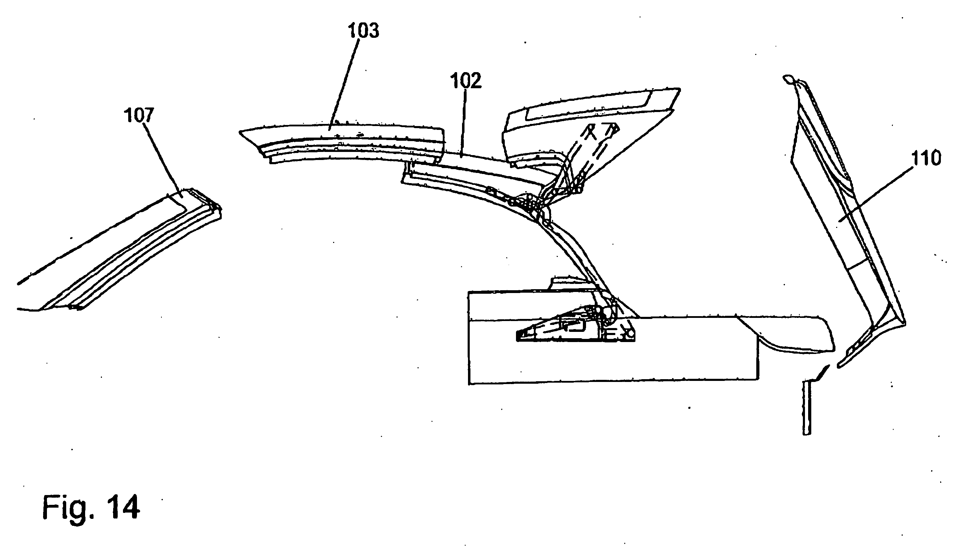

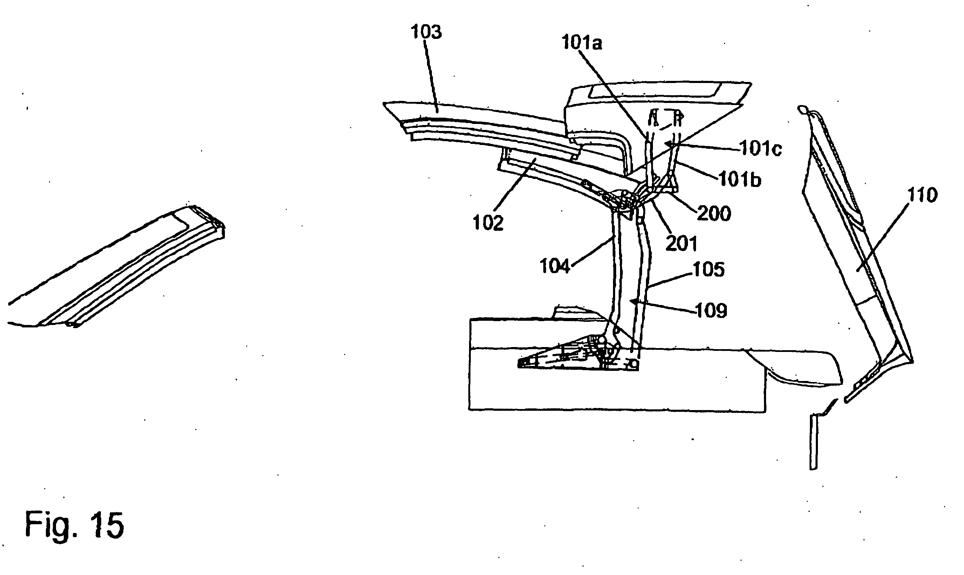

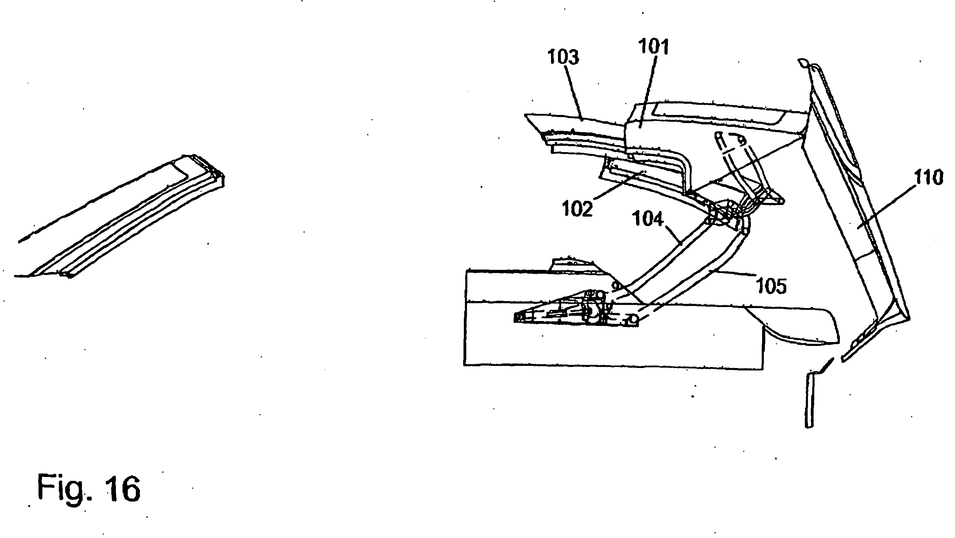

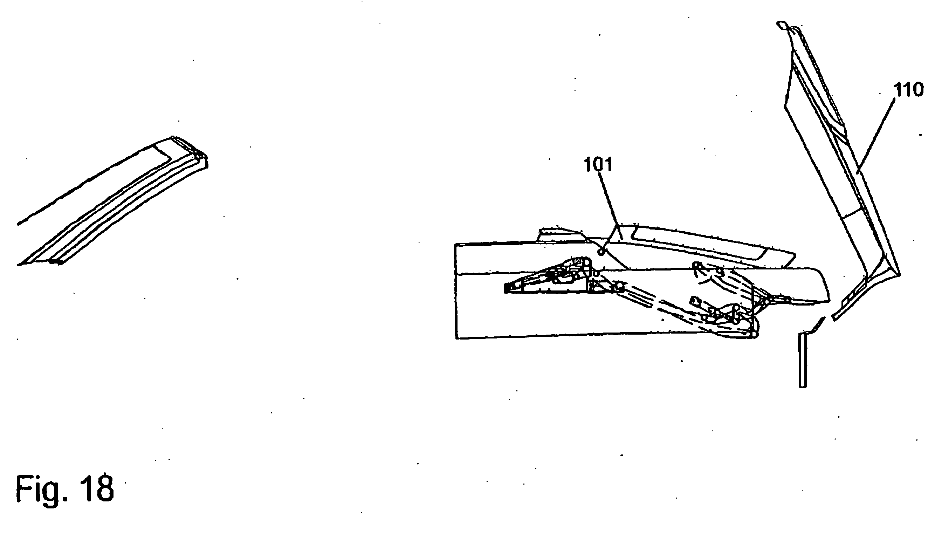

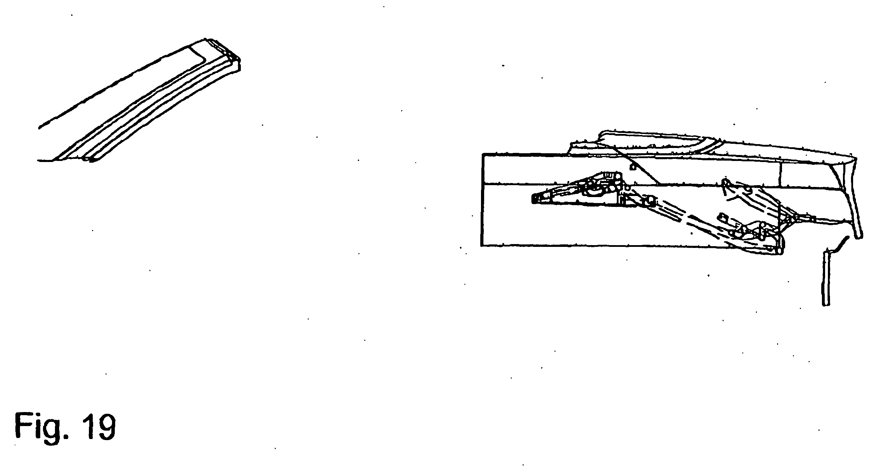

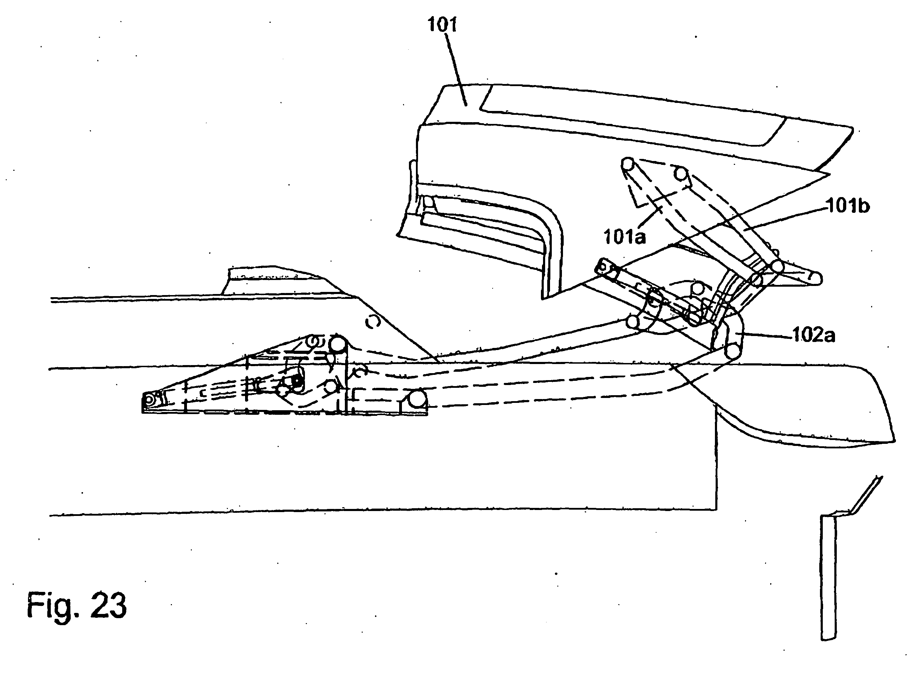

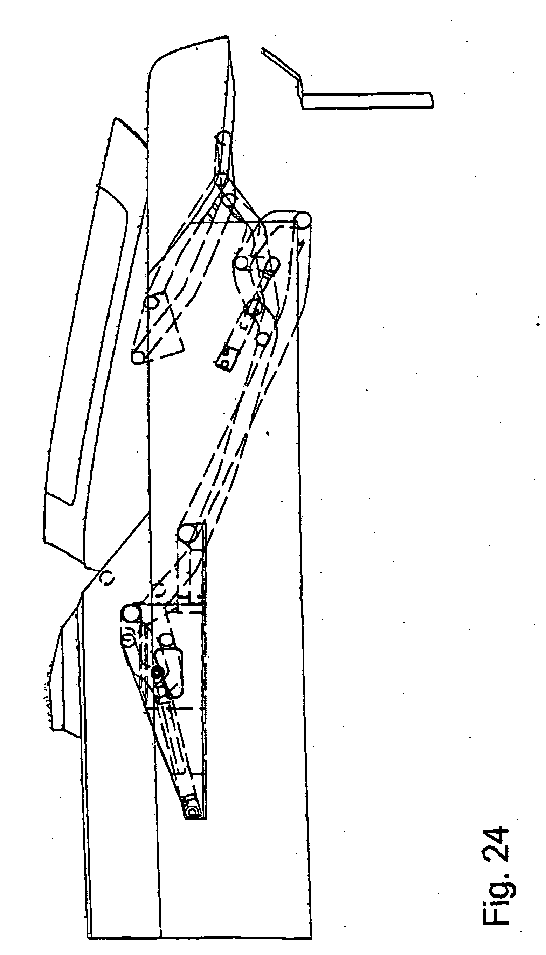

Wie in Fig. 11 bis Fig. 24 gezeigt ist, umfaßt das Verdeck ebenfalls drei Dachteile 101, 102, 103. Insgesamt sind die Bezugszeichen des zweiten Ausführungsbeispiels im Vergleich zum ersten Ausführungsbeispiel so gewählt, daß bei vergleichbaren oder analogen Bauteilen jeweils die Zahl 100 addiert wurde. Somit umfaßt das Verdeck ebenfalls einen ersten Hauptlenker 104 und einen zweiten Hauptlenker 105, die Bestandteil eines Hauptviergelenks 109 sind.

Im Unterschied zu dem ersten Ausführungsbeispiel ist das dritte, vordere Dachteil 103 über eine Schiebeführung mit dem zweiten, mittleren Dachteil 102 verbunden. Eine zwangsgesteuerte Verbindung zwischen dem dritten Dachteil 103 und dem ersten Dachteil 101 ist daher nicht vorgesehen.

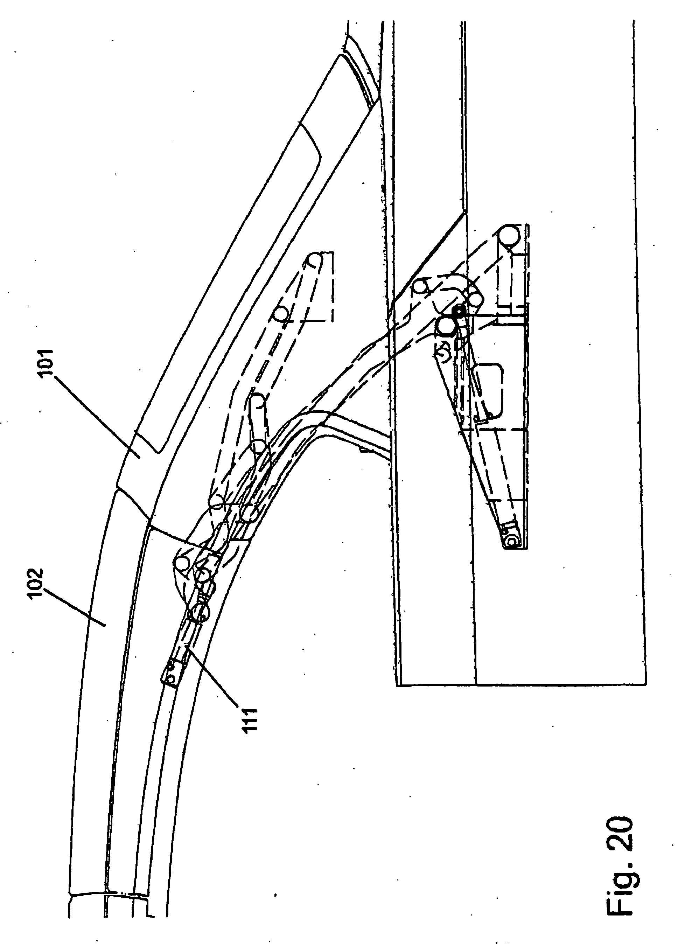

Das erste Dachteil 101 ist ebenfalls an dem zweiten Dachteil 102 verschwenkbar aufgenommen. Die Aufnahme und Ansteuerung des ersten Dachteils ist in Fig. 20 bis Fig. 24 in verschiedenen Abschnitten einer Verdecköffnungsbewegung vergrößert und detailliert dargestellt,

Dabei ist das erste Dachteil 101 über einen ersten Dachteillenker 101a und einen zweiten Dachteillenker 101b schwenkbar mit einem Basislenker 200 verbunden, so daß die Dachteillenker 101a, 101b, das erste Dachteil 101 und der Basislenker 200 zusammen ein Dachteilviergelenk 101c ausbilden.

Der Basislenker 200 ist zudem an dem zweiten Dachteil 102, genauer an einem das zweite Dachteil 102 tragenden Koppellenker 102a, drehbar aufgenommen. Der Basislenker 200 ist über eine als Hydraulikzylinder ausgebildete Antriebsvorrichtung 111, die gegen das zweite Dachtell 102 abgestützt ist, in besagter Aufnahme antreibbar drehbar.

Ein Steuerlenker 201 verbindet den zweiten Dachteillenker 101b mit dem ersten Hauptlenker 104. Durch diese Verbindung ist gewährleistet, daß das Dachteil-Viergelenk 101c nicht frei bewegbar ist, sondern insgesamt einer Zwangssteuerung unterliegt. Zudem ist dadurch die relative Position und Lage des ersten Dachteils 101 zu dem zweiten Dachteil 102 durch zwei Parameter bestimmt: Zum einen sind Position und Lage über die Antriebsvorrichtung 111 veränderbar, indem der Basislenker 200 gegenüber dem Koppellenker 102a bzw. dem starr mit letzterem verbundenen zweiten Dachteil 102 bewegt wird. Zum anderen führt eine Bewegung des Hautpviergelenks 109 zu einer Bewegung des ersten Hauptlenkers 104 relativ zu dem Koppellenker 102a. Hierdurch wird mittels des Steuerlenkers 201 ebenfalls das Dachteil-Viergelenk 101c verschwenkt.

Durch diese doppelte Ansteuerung des ersten Dachteils 101 wird eine besondere Möglichkeit einer Verdecköffnungsbewegung realisierbar, wie sie in Fig. 11 bis Fig. 19 in einer Vielzahl von Zwischenstellungen dokumentiert ist:

Zunächst wird, ausgehend von der geschlossenen Verdeckposition gemäß Fig. 11, die Antriebsvorrichtung 111 betätigt, so daß der Basislenker 200 angetrieben bewegt wird. Das Hauptviergelenk 109 bleibt dabei zunächst unverändert. Die angetriebene Bewegung des Basisienkers 200 ist eine Drehung des Basislenkers 200 um ein Drehgelenk 200a, in dem der Basislenker 200 an dem Koppellenker 102a angelenkt ist.

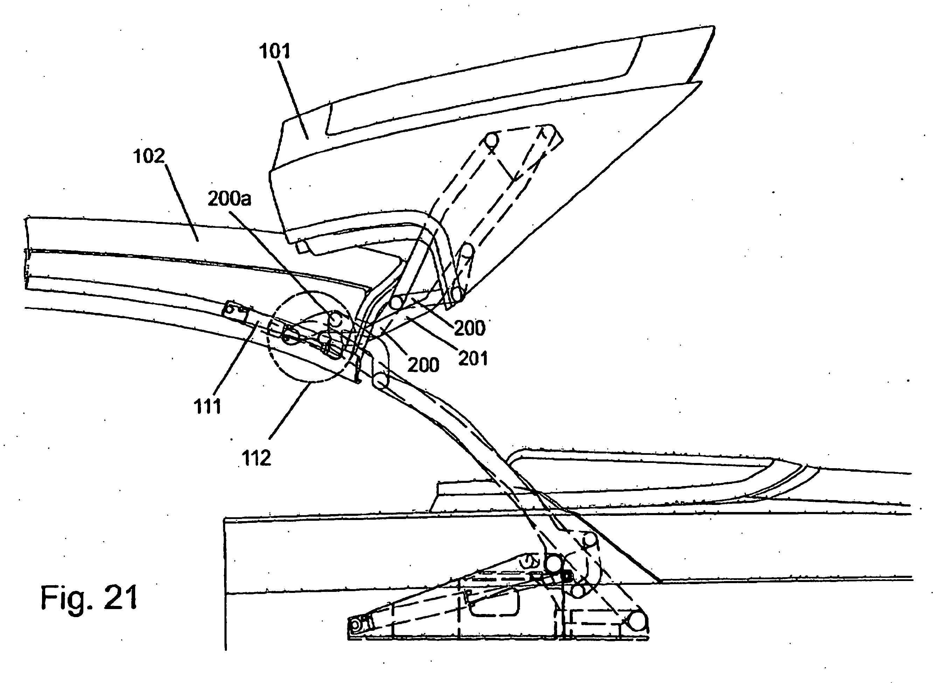

Dies führt zunächst (Fig. 21) im wesentlichen zu einem Aufschwenken des ersten Dachteils 101 in Fahrtrichtung um eine gedachte Drehachse 112, die in etwa an einem hinteren Ende des zweiten Dachteils 102 angeordnet ist. In Fig. 21 ist die Position der gedachten Drehachse 112 durch eine gestrichelte Kreislinie lokalisiert. Es ist dabei zu beachten, daß die Drehung um die Drehachse 112 lediglich eine Drehbewegung in einem angenäherten Sinne ist.

Insbesondere handelt es sich nicht exakt um die Drehbewegung des Basislenkers 200 um das Drehgelenk 200a. Bedingt durch eine ebenfalls vorhandene, wenn auch in diesem ersten Abschnitt der Verdecköffnungsbewegung nur unwesentliche Öffnung des Dachteil-Viergelenks 101c, vollzieht das Dachteil 102 zunächst vielmehr eine Überlagerung aus einer Drehbewegung und einer Schwenkbewegung. Aufgrund des geringen Anteils der Schwenkbewegung kann dies auch als Drehbewegung um eine in ihrer Position schwach veränderliche Drehachse 112 angesehen werden.

Hierdurch wird vermieden, daß das erste Dachteil 101 zunächst über das zweite Dachteil 102 verschwenkt wird, was einen ästhetisch wertvollen Bewegungsablauf ohne eine Paketbildung der Dachteile 101, 102, 103 ergibt.

Das dritte Dachteil 103 wird über eine Linearführung über das zweite Dachteil 102 verschoben, wobei es aber hinsichtlich seiner Höhe unterhalb der untersten Kante des aufgeschwenkten ersten Dachteils 101 verbleibt.

Ferner wird im Zustand des aufgeschwenkten ersten Dachteils 101 ein Heckelement 110 analog zu dem ersten beschriebenen Ausführungsbeispiel zur Ablage des Verdecks entgegen der Fahrtrichtung aufgeschwenkt, wobei der vordere, im geschlossenen Verdeckzustand eine Hutablage bildende Bereich des Heckelements 110 ohne weitere Maßnahmen an dem aufgeschwenkten ersten Dachteil 101 vorbeischwenken kann,

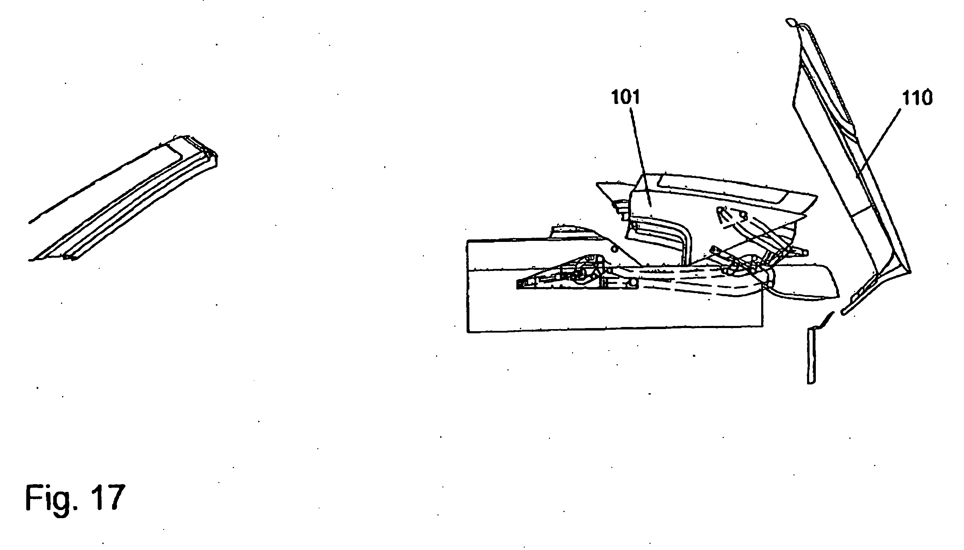

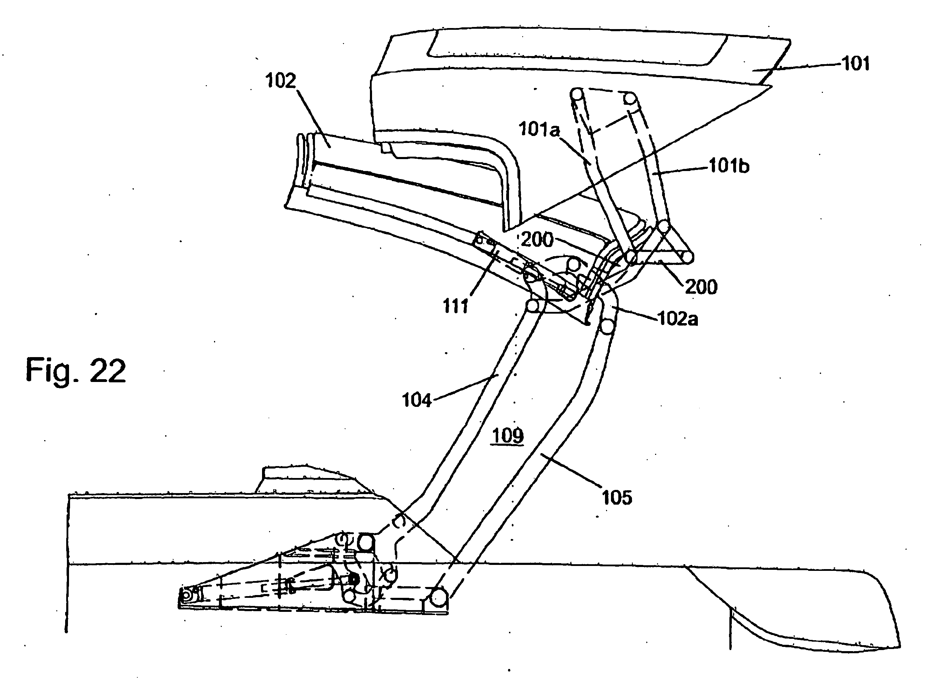

In der weiteren Verdecköffnungsbewegung (Fig. 22 bis 24) wird nunmehr mittels einer Krafteinleitungselnheit 106a das Hauptviergelenk 109 verschwenkt, wobei mittels der vorbeschriebenen Zwangssteuerung auch eine weitere Bewegung des ersten Dachteils relativ zu dem zweiten Dachteil verbunden ist. Es ergibt sich somit eine fließende Verdecköffnungsbewegung, bei der eine Paketbildung der drei Dachteile 101, 102 und 103 erst unmittelbar vor einem vollständigen Versenken der Dachteile (siehe etwa Fig. 17) in den Heckbereich des Fahrzeugs erfolgt ist. Insbesondere liegt eine ständige Relativbewegung des ersten Dachteils 101 zu dem zweiten Dachteil 102 vor, welche wie zuvor beschrieben durch die Verkoppelung des Hauptviergelenks 109 mit dem Dachteil-Viergelenk 101c über den Steuerlenker 201 bedingt ist.

Nachfolgend wird ein drittes Ausführungsbeispiel eines Verdecks beschrieben:

Das dritte bevorzugte Ausführungsbeispiel eines Verdecks umfaßt ein drittes, vorderes Dachteil 301, ein erstes, hinteres Dachteil 302 sowie ein im geschlossenen Zustand zwischen dem ersten und dem dritten Dachteil 301, 302 angeordnetes zweites, mittleres Dachteil 310. Das mittlere Dachteil 310 ist fest mit einem Mittellenker 310a verbunden, so daß das mittlere Dachteil 310 und der Mittellenker 310a als eine Baueinheit angesehen werden können.

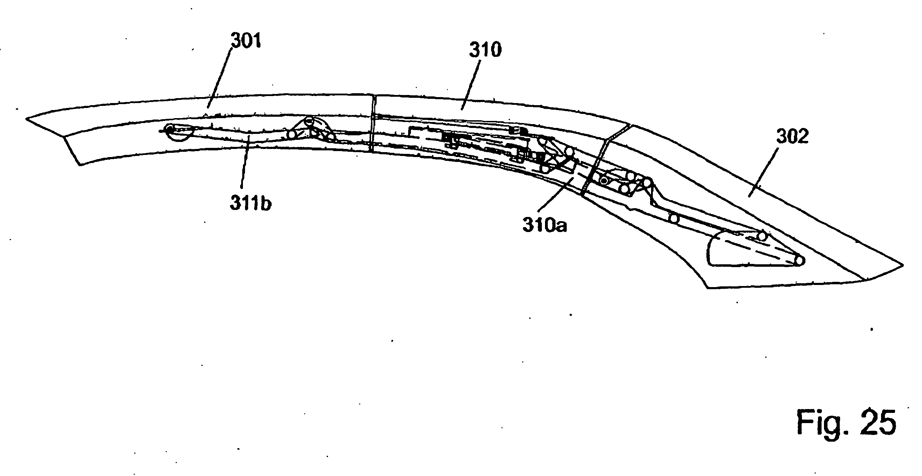

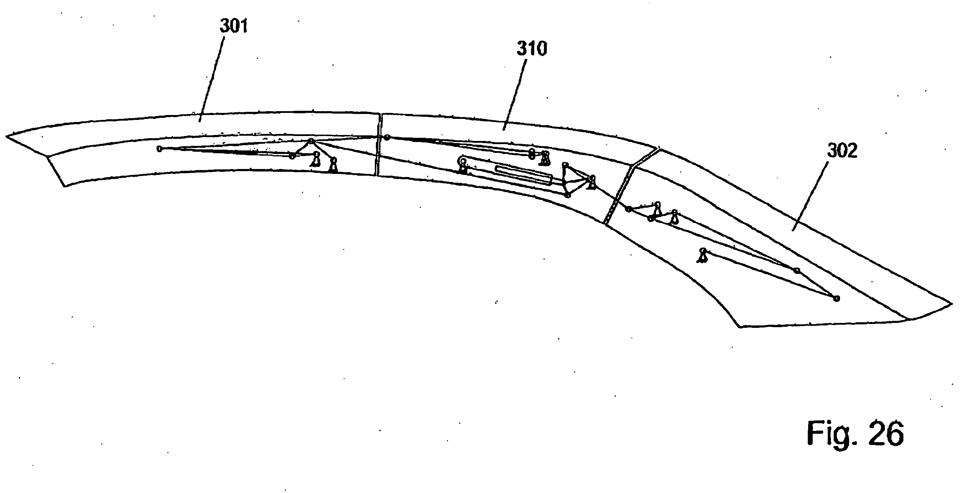

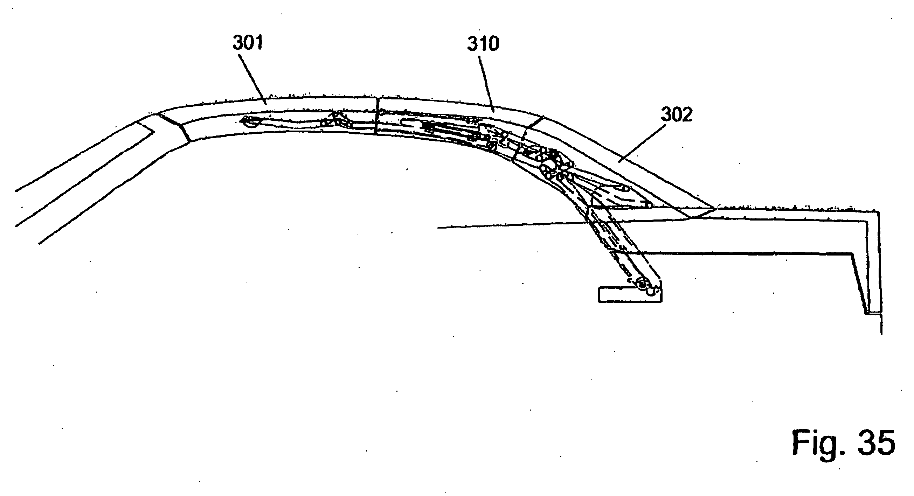

Das dritte Dachteil 301 ist über ein vorderes Viergelenk 311 mit dem mittleren Dachteil 310 verbunden, wobei ein Frontlenker 311b des vorderen Viergelenks gelenkig mit dem Mittellenker 310a verbunden ist und ein außenliegender Lenker 311a des vorderen Viergelenks 311 von außen an dem mittleren Dachteil 310 angelenkt ist. Der außenliegende Lenker liegt in dem geschlossenen Zustand gemäß Fig. 25, Fig. 26 und Fig. 35 außen an dem mittleren Dachteil 310 an, wobei sich der außenliegende Lenker in einer Dachleisten- oder Dachrinnenausnehmung des mittleren Dachteils 310 befindet.

Das zweite, hintere Dachteil 302 ist mittels eines hinteren Viergelenks 312 an dem Mittellenker 310a angelenkt. Das hintere Dachteil 302 umfaßt C-Säulen des Verdecks sowie eine feste Heckscheibe. Das hintere Viergelenk 312 umfaßt einen ersten Hecklenker 312a sowie einen zweiten Hecklenker 312b.

insgesamt sind somit das dritte Dachteil 301 und das erste Dachteil 302 jeweils über das mittlere Dachteil 310 verschwenkbar, wobei das hintere Dachteil 302 zudem über das vordere Dachteil 301 verschwenkbar ist.

Das vordere Viergelenk 311 und das hintere Viergelenk 312 sind über eine antreibbare Zwangssteuerung 304 miteinander verbunden, so daß eine Stellung des dritten Dachteils 301 einer Stellung des ersten Dachteils 302 jeweils eineindeutig mechanisch zugeordnet ist.

Die Zwangssteuerung 304 umfaßt ein das vordere Viergelenk 311 ansteuerndes erstes Gestänge 308, ein das hintere Viergelenk 312 ansteuerndes zweites Gestänge 309 und einen Drehlenker 307. Der Drehlenker ist in einem ersten Gelenk 7a drehbar mit dem Mittellenker 310a verbunden. Der Drehlenker 307 ist zudem mittels einer als linearer Hydraulikzylinder ausgebildeten Krafteinleitungseinheit 305, die gegen den Mittellenker 310a abgestützt ist, antreibbar drehbar. Vorliegend ist der Drehlenker als dreistrahliger Lenker ausgebildet. Insbesondere kann unter einem Drehlenker im Sinne der Erfindung aber auch eine Drehscheibe oder Steuerscheibe verstanden werden. Als Steuerscheibe kann insbesondere auch eine universell nutzbare Lochscheibe eingesetzt werden, so daß durch variable Anbringung von Gelenken an der Lochscheibe eine an verschiedene Verdecke anpaßbare Verzögerungssteuerung mittels standardisierter Bauteile vorgesehen sein kann.

Das erste Gestänge 308 umfaßt einen ersten, vorderen Steuerlenker 308a sowie zwei vordere Lenker 308b, 308c, wobei durch eine Verbindung des Frontlenkers 311b mit dem ersten Steuerlenker 308a mittels der beiden vorderen Lenker 308b, 308c ein besonders großer Schwenkwinkel des vorderen Viergelenks 311 erreichbar ist. Der erste Steuerlenker 308a ist in einem zweiten Gelenk 307b des Drehlenkers 307 mit dem Drehlenker 307 verbunden.

Das zweite Gestänge 309 umfaßt einen zweiten, hinteren Steuerlenker 309a, welcher über einen kleinen Stützlenker 309b gegenüber dem Mittellenker 310a geführt ist. Der zweite Steuerlenker 309a ist an einem Fortsatz des zweiten Hecklenkers 312b angelenkt, so daß das hintere Viergelenk 312 an dem zweiten Steuerlenker 309a angelenkt und über diesen ansteuerbar ist.

Das mittlere Dachteil 310 bzw. der Mittellenker 310a ist über ein als Hauptviergelenk 313 ausgebildetes Hauptlenkergetriebe 313 mit einer karosseriefest angebrachten Hauptlagereinheit 314 verbunden, wobei das Hauptviergelenk 313 einen ersten Hauptlenker 313a und einen zweiten Hauptlenker 313b umfaßt.

Ein heckseitiger Ablagebereich 316 des Fahrzeugs ist mittels eines Heckelements 315 überdeckbar, wobei das Heckelement 315 zur Freigabe eines Durchtrittsraumes für das abzulegende Verdeck entgegen der Fahrtrichtung aufschwenkbar ist.

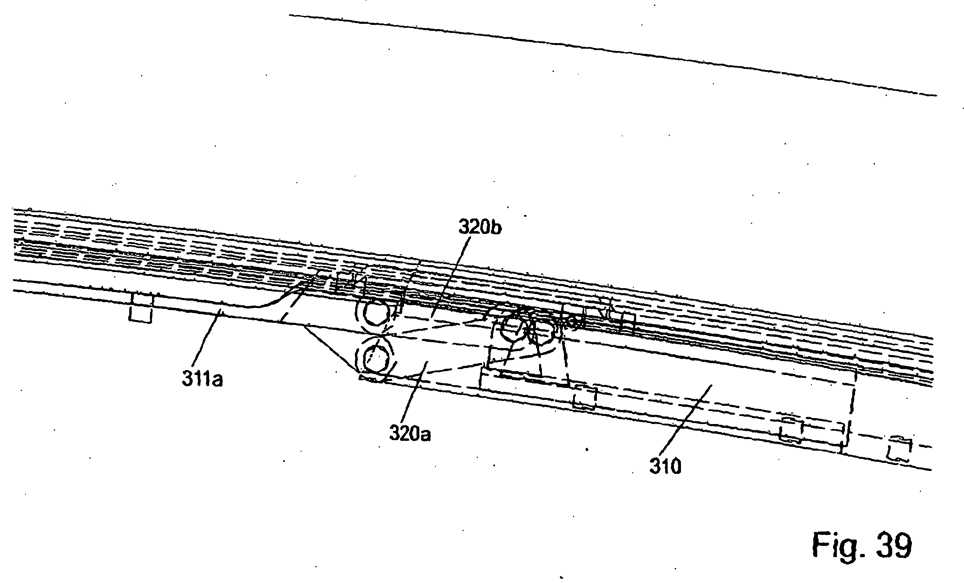

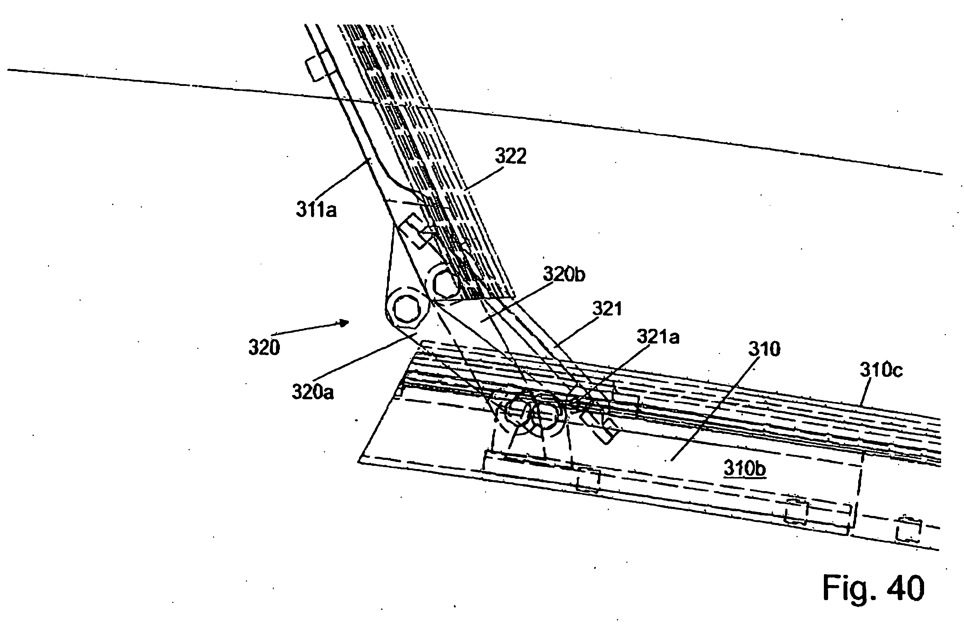

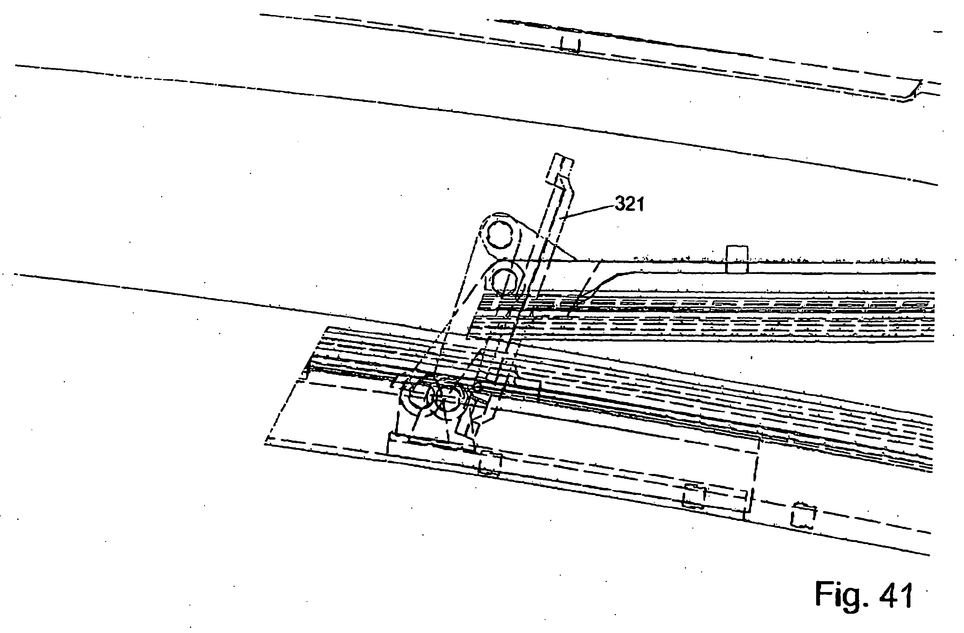

Als besonders vorteilhafte Detaillösung des erfindungsgemäßen Verdecks, die insbesondere in Fig. 39 bis Fig. 41 gezeigt ist, ist der außenliegende Lenker 311a nicht über ein herkömmliches Drehgelenk an dem mittleren Dachteil 310 angelenkt. Vielmehr umfaßt die Anlenkung ein kleines Viergelenk 320, wobei das mittlere Dachteil 310 die Basis des kleinen Viergelenks 320 und der außenliegende Lenker 311a die Koppel des kleinen Viergelenks 320 bildet. Ein erster Lenker 320a und ein zweiter Lenker 320b des kleinen Viergelenks 320 überkreuzen sich. Eine kurze Abdeckplatte 321 ist um eine eigene Anlenkung 321a im wesentlichen parallel zu den Lenker 320a, 320b des kleinen Viergelenks 320 mitverschwenkbar, wobei die Abdeckplatte 321 im Bereich ihres ihrer Anlenkung 321a gegenüberliegenden Endes gleitgeführt ist.

Bei der Auslegung eines Lenkers als außenliegender Lenker ist auf eine Reihe von Besonderheiten Rücksicht zu nehmen. Wie auch im gezeigten Ausführungsbeispiel wird ein außenliegender Lenker 311a vorteilhaft in einer bei den meisten modernen Fahrzeugverdecken ohnehin vorgesehenen Dachleisten-Ausnehmung 310b angeordnet. Die Dachleistenausnehmung 310b ist außerhalb des Bereichs des Lenkers 310a mit einer Dachleistenabdeckung 310c kaschiert. Der außenliegende Lenker 311a umfaßt zweckmäßig eine entsprechende, auf den eigentlichen Lenker aufgesetzte Lenkerkaschierung 322, so daß der Lenker im geschlossenen Verdeckzustand die Erscheinung einer durchgehenden Dachleiste 310c, 322 ermöglicht. Bei einer solchen Anordnung ist allerdings problematisch, daß der Lenker 311a bei einer Schwenkbewegung aufgrund seiner vertieften Unterbringung in der Dachleistenausnehmung 310b an der Dachleistenabdeckung 310c anstoßen würde, zumindest dann, wenn ein großer Schwenkwinkel des Lenkers 311a erforderlich ist. Durch die vorteilhafte Detaillösung der Anlenkung des Lenkers in dem kleinen Viergelenk 320 kann jedoch erreicht werden, daß der Lenker 311a bereits zu Beginn seiner Schwenkbewegung samt seiner Dachleistenkaschierung 322 über seine gesamte Länge aus der Dachleistenausnehmung 310b heraustritt, so daß ein besonders großer Schwenkwinkel ermöglicht ist. Fig. 39 bis Fig. 41 zeigen, daß auf diese Weise ein freier Schwenkwinkel des außenliegenden Lenkers von nahezu 180 Grad ermöglicht ist.

Die kurze, mit dem Viergelenk 320 mitverschwenkbare Abdeckplatte 321 dient im geschlossenen Verdeckzustand lediglich der Überdeckung des Dachleistenbereichs über dem kleinen Viergelenk 320.

Es ist zu erwähnen, daß aus dem Stand der Technik bisher Lösungen bekannt sind, bei denen ein versenkter, außenliegender Lenker mittels einer an einem Dachteil schwenkbar angebrachten, streifenförmigen und eine Dachleistenkaschierung bildenen Klappe abdeckbar ist. Demgegenüber hat die beschriebene Lösung deutliche Vorteile, da zum Beispiel die Dachieistenkaschierung unmittelbar auf dem Lenker festgelegt werden kann.

Das Verdeck funktioniert nun wie folgt:

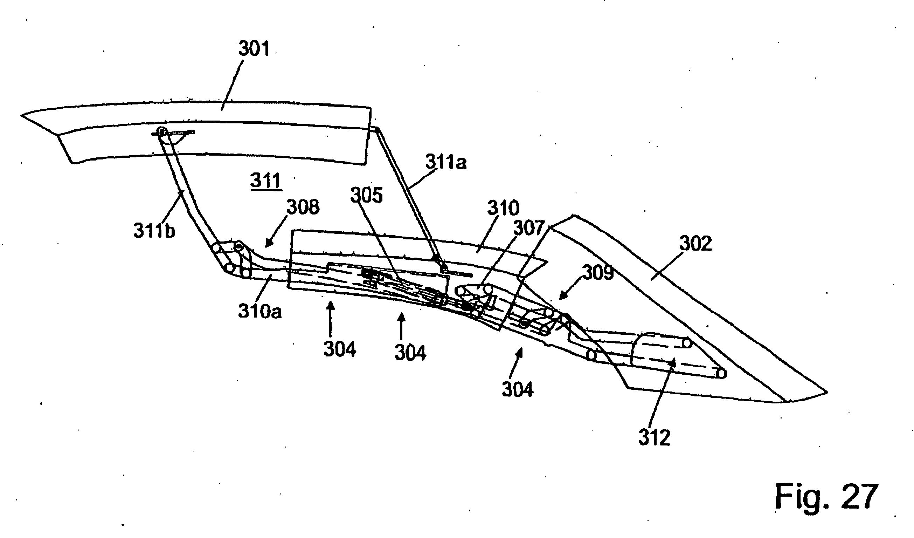

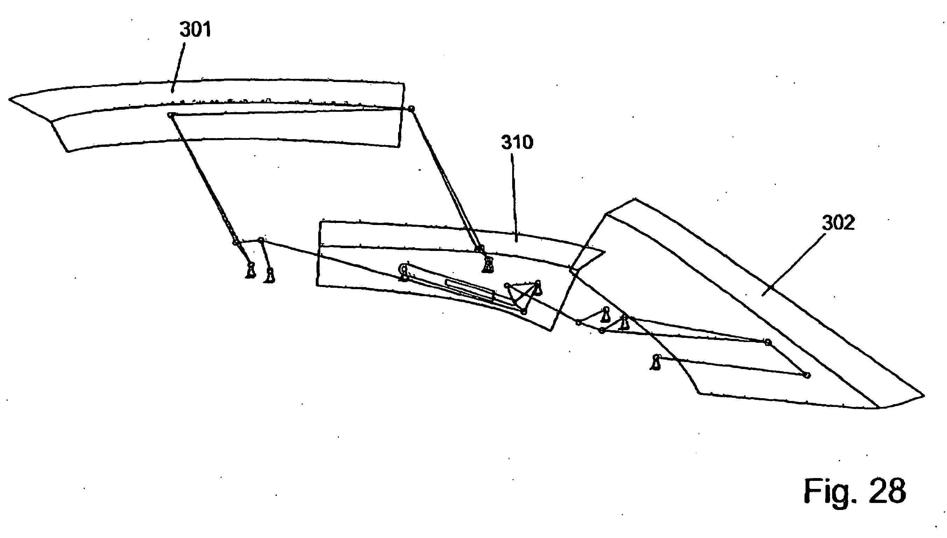

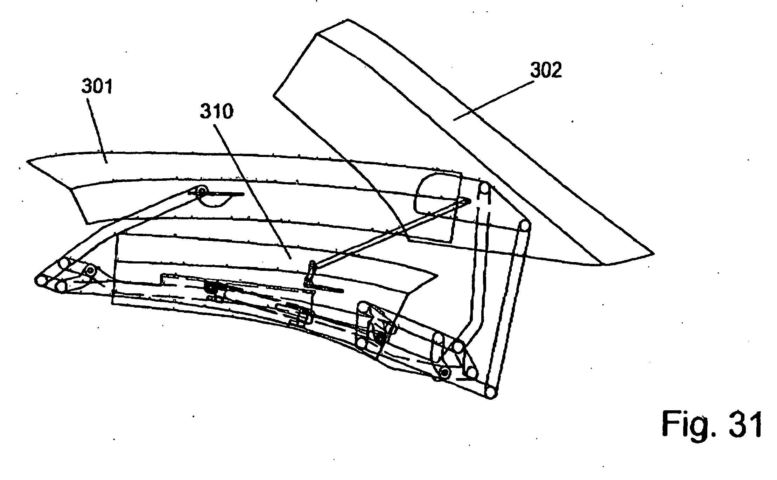

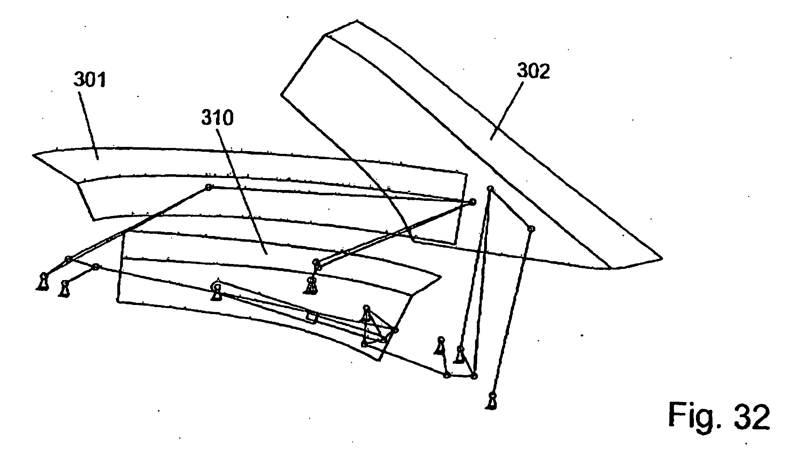

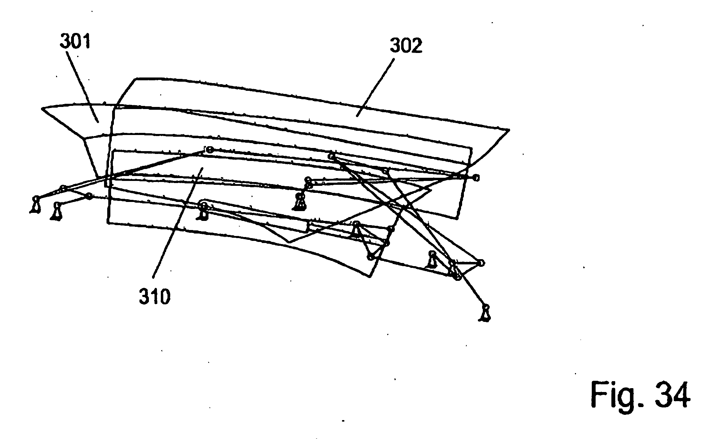

Ausgehend von dem geschlossenen Verdeckzustand gemäß Fig. 25, Fig. 26 und Fig. 35 wird zunächst ein erster Teil einer Verdecköffnungsbewegung eingeleitet, Hierzu wird die Kraftelnleitungseinheit 305 betätigt, wodurch der Drehlenker 307 gemäß der Darstellungen entgegen dem Uhrzeigersinn gedreht wird. Aus einem Vergleich der Fig. 25 bis Fig. 34 wird deutlich, daß dabei zunächst hauptsächlich das erste Gestänge 308 durch den Drehlenker 307 betätigt wird, während aufgrund der Stellung des dritten Gelenks 307c zu dem zweiten Gestänge 309 zunächst kaum eine Betätigung des zweiten Gestänges 309, insbesondere in der relevanten Längsrichtung des zweiten, hinteren Steuerlenkers 309a, stattfindet.

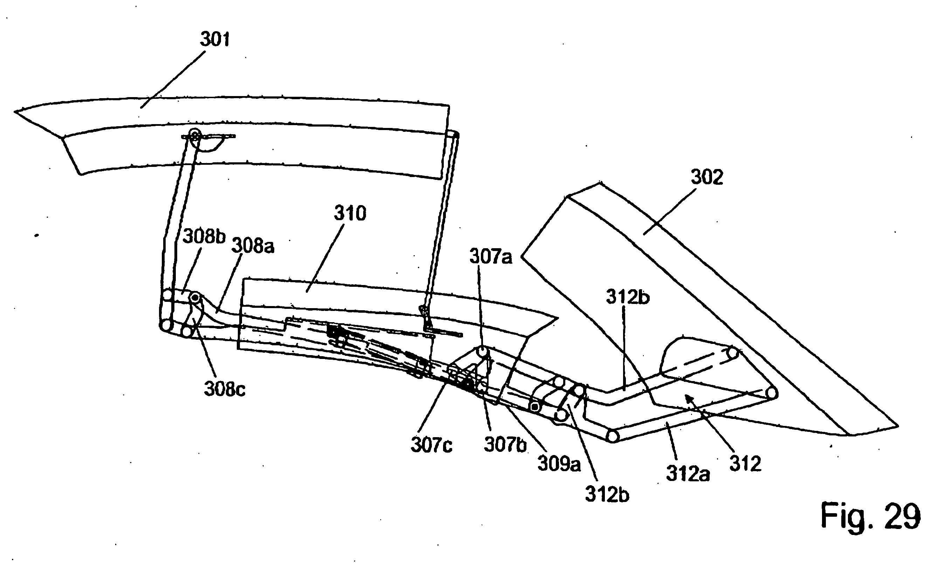

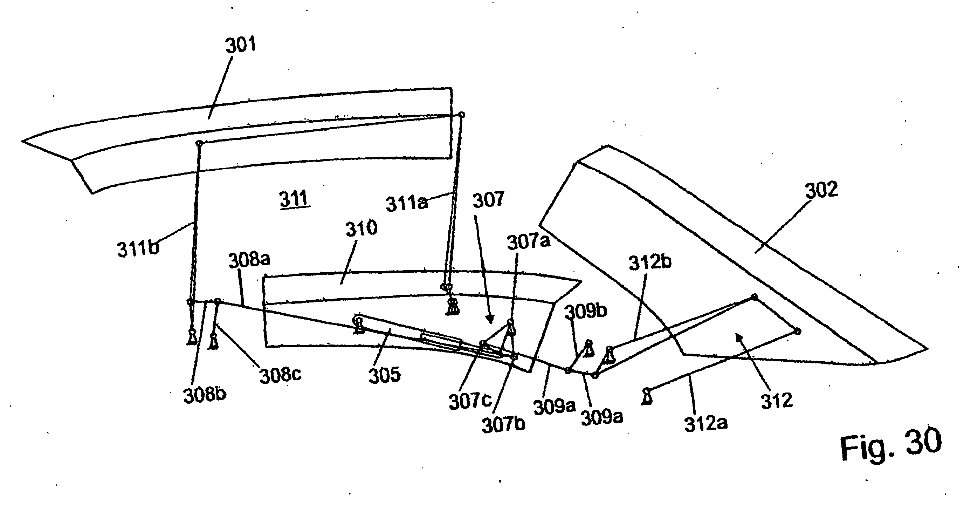

Somit erfolgt zunächst hauptsächlich eine Verschwenkung des vorderen Dachteils 301 über das mittlere Dachteil 310. Die Verschwenkung des vorderen Dachteils 301 ist im Bewegungsablauf in etwa bis zu der in Fig. 29 und Fig. 30 dargestellten Position vorherrschend.

Nachfolgend verlangsamt sich die Relativbewegung des vorderen Dachteils 301, welches bereits wesentlich über das mittlere Dachteil 310 verschwenkt ist. Zugleich nimmt die Bewegung des hinteren Dachteils 302 zu, da nunmehr (etwa ab der in Fig. 29 und Fig. 30 gezeigten Position) eine sehr direkte Umsetzung der Drehbewegung des Drehlenkers 307 in eine längsgerichtete Bewegung des hinteren Steuerlenkers 309a stattfindet. Der beschriebene Bewegungsablauf der beiden Dachteile kann somit als quasi-sequentiell bezeichnet werden.

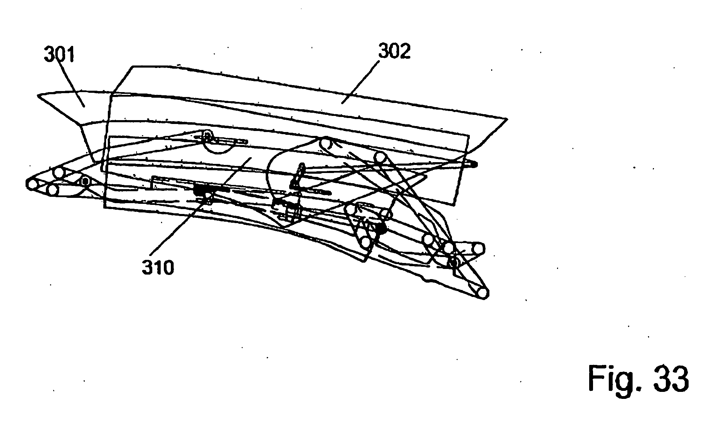

Ein Ende des ersten Teils der Verdecköffnungsbewegung ist bei vollständiger Anordnung der drei Dachteile 301, 302 und 310 zu einem Stapel erreicht (siehe Fig. 33, Fig. 34 und Fig. 36).

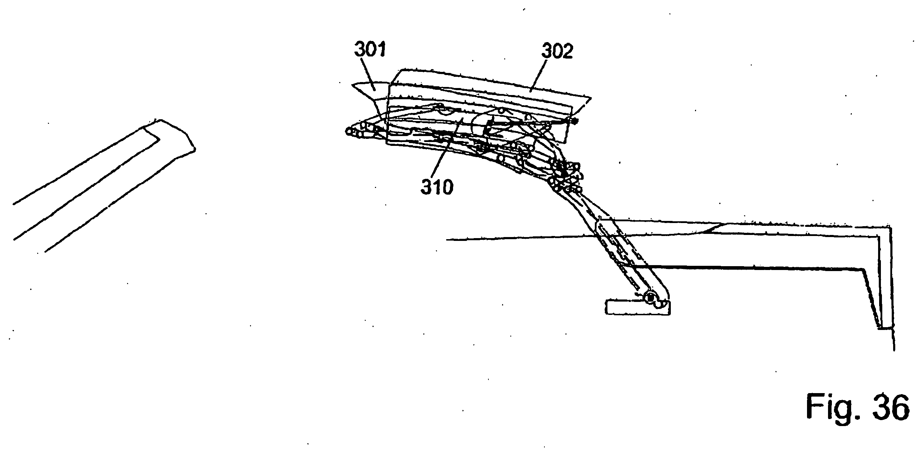

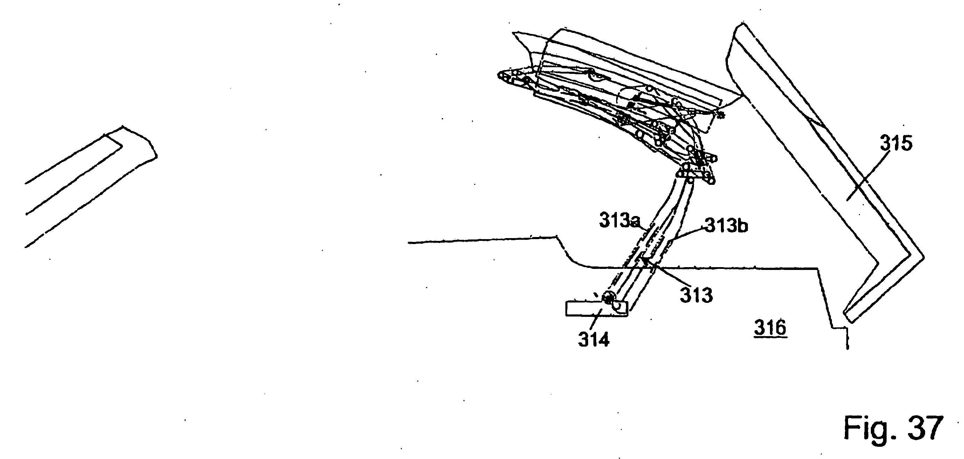

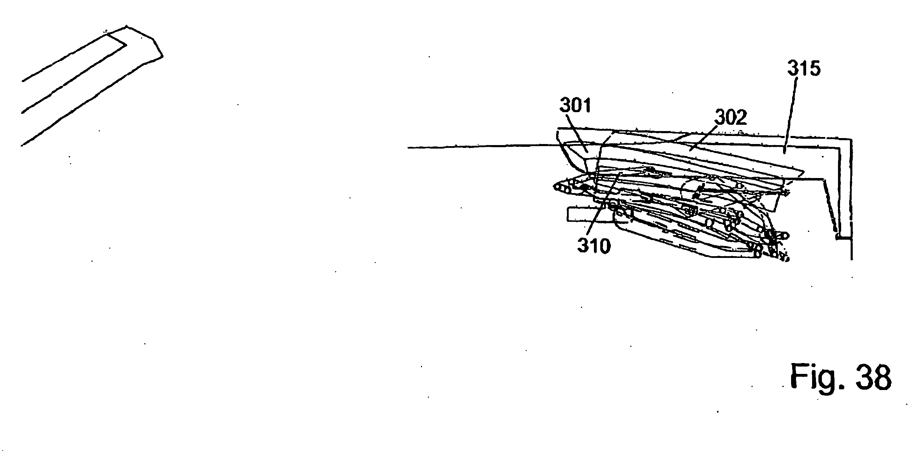

Ein zweiter Teil der Verdecköffnungsbowegung ist in den Gesamtansichten des Verdecks gemäß Fig. 36 bis Fig. 38 dargestellt. Hierbei wird mittels einer mit einer zweiten Antriebsvorrichtung angetriebenen Verschwenkung des Hauptlenkergetriebes 313 das zuvor gebildete Paket der Dachteile 301, 302, 310 in einen heckseitigen Ablagebereich 316 des Fahrzeugs verbracht. Hierzu wird zunächst das Heckelement 315 entgegen der Fahrtrichtung aufgeschwenkt und nachfolgend wieder zugeschwenkt.

## Patentansprüche

1. Verdeck für ein Cabriolet-Fahrzeug, umfassend
ein erstes Dachteil (101), wobei das erste Dachteil (101) in einem geschlossenen Verdeckzustand auf einem öffnungsfähigen Heckelement (110) des Fahrzeugs aufliegt,
ein zweites, schwenkbar mittels Lenkern (104, 105, 102a) an dem Fahrzeug gelagertes Dachteil (102), wobei das zweite Dachteil (102) in einem geschlossenen Verdeckzustand in Fahrtrichtung vor dem ersten Dachteil (101) angeordnet ist,
ein drittes Dachteil (103), wobei das dritte Dachteil (103) in einem geschlossenen Verdeckzustand in Fahrtrichtung vor dem zweiten Dachteil (102) angeordnet ist,
wobei das erste Dachteil (101) von dem Heckelement (110) abhebbar ist,
wobei das erste Dachteil (101) an den Lenkern (104, 105, 102a) des zweiten Dachteils (102) bewegbar aufgenommen ist, und
wobei das erste Dachteil (101) bei einer öffnung des Verdecks zunächst um eine Drehachse (112) in Fahrtrichtung aufschwenkbar ist.

2. Verdeck nach Anspruch 1, **dadurch gekennzeichnet, daß** das zweite Dachteil (102) während des Abhebens des ersten Dachteils (101) von dem Heckelement (110) in seiner Ausgangsstellung bleibt.

3. Verdeck nach Anspruch 1 oder 2, **dadurch gekennzeichnet, daß** das dritte Dachteil (103) über das zweite Dachteil (102) verlagerbar ist.

4. Verdeck nach einem der Ansprüche 1 bis 3, **dadurch gekennzeichnet, daß** das Heckelement (110) entgegen der Fahrtrichtung aufschwenkbar ist.

5. Verdeck nach einem der Ansprüche 1 bis 4, **dadurch gekennzeichnet, daß** das erste Dachteil (101) in einem ersten Abschnitt einer Verdecköffnungsbewegung von dem Heckelement (110) abhebbar ist.

6. Verdeck nach einem der Ansprüche 1 bis 5, **dadurch gekennzeichnet, daß** das erste Dachteil (101) in einem geschlossenen Verdeckzustand dichtend von oben auf dem Heckelement (110) aufliegt.

7. Verdeck nach einem der Ansprüche 1 bis 6, **dadurch gekennzeichnet, daß** das dritte Dachteil (103) in einem geschlossenen Verdeckzustand an einem Frontscheibenrahmen (107) des Fahrzeugs lösbar festlegbar ist.

8. Verdeck nach einem der Ansprüche 1 bis 7, **dadurch gekennzeichnet, daß** die Drehachse (112) in einem heckseitigen Endbereich des zweiten Dachteils (102) angeordnet ist.

9. Verdeck nach einem der Ansprüche 1 bis 8, **dadurch gekennzeichnet, daß** ein antreibbarer Basislenker (200) an dem zweiten Dachteil (102) bewegbar aufgenommen ist.

10. Verdeck nach Anspruch 9, **dadurch gekennzeichnet, daß** der Basislenker (200) die Basis eines Dachteilviergelenks (101c) bildet, wobei zudem ein erster Dachteillenker (101a) und ein zweiter Dachteillenker (101b) vorgesehen sind und das erste Dachteil (101) die Koppel des DachteilViergelenks (101c) bildet.

11. Verdeck nach Anspruch 10, **dadurch gekennzeichnet, daß** ein Steuertenker (201) einen der Dachteillenker (101a, 101b) mit einem Hauptlenker (104, 105) des Verdecks gelenkig verbindet.

12. Verdeck nach einem der Ansprüche 1 bis 11, **dadurch gekennzeichnet, daß** das dritte Dachteil (103) an dem zweiten Dachteil (102) über eine Schiebeführung bewegbar aufgenommen ist.

13. Verdeck nach einem der Ansprüche 1 bis 12, **dadurch gekennzeichnet, daß** das erste Dachteil (101) ausgehend von einem geschlossenen Verdeckzustand um eine gedachte Drehachse (112) in eine geöffnete Lage verschwenkbar ist, in der das erste Dachteil (101) überwiegend einen Bereich in Fahrtrichtung hinter dem zweiten Dachteil (102) überdeckt.

14. Verdeck nach einem der Ansprüche 1 bis 13, **dadurch gekennzeichnet, daß** die schwenkbare Lagerung des zweiten Dachteils (102) an dem Fahrzeug in einem geschlossenen Verdeckzustand mittels einer geschlossenen Lenkerkette erfolgt.

15. Verdeck nach einem der Ansprüche 1 bis 14, **dadurch gekennzeichnet, daß** alle drei Dachteile (101, 102, 103) in der geöffneten Verdeckposition mit nach oben orientierter Außenseite abgelegt sind.

## Claims

1. A folding top for a cabriolet vehicle, comprising
a first roof part (101), the first roof part (101) resting upon an openable rear element (110) in a closed state of the folding top,
a second roof part (102) being mounted with links (104, 105, 102a) in a pivotable manner on the vehicle, the second roof part (102) being arranged in front of the first roof part (101), as seen in the direction of travel, in a closed state of the folding top,
a third roof part (103), the third roof part (103) being arranged in front of the second roof part (102), as seen in the direction of travel, in a closed state of the folding top,
it being possible for the first roof part (101) to be raised up from the rear element (110),
wherein the first roof part (101) is mounted in a movable manner on the links (104, 105, 102a) of the second roof part (102), and
wherein the first roof part (101), when the folding top is being opened, can, in the first instance, be pivoted open in the direction of travel about an axis of rotation (112).

2. The folding top as claimed in claim 1, **characterized in that** the second roof part (102) remains in its initial position while the first roof part (101) is raised up from the rear element (101).

3. The folding top as claimed in claim 1 or 2, **characterized in that** the third roof part (103) is displaceable over the second roof part (102).

4. The folding top as claimed in one of claims 1 to 3, **characterized in that** the rear element (110) can be pivoted open counter to the direction of travel.

5. The folding top as claimed in one of claims 1 to 4, **characterized in that**, in a first stage of a folding-top opening movement, the first roof part (101) can be raised up from the rear element (110).

6. The folding top as claimed in one of claims 1 to 5, **characterized in that** the first roof part (101) rests on the rear element (110) with sealing action from above in a closed state of the folding top.

7. The folding top as claimed in one of claims 1 to 6, **characterized in that** the third roof part (103) can be secured in a releasable manner on a windshield frame (107) of the vehicle in a closed state of the folding top.

8. The folding top as claimed in one of claims 1 to 7, **characterized in that** the axis of rotation (112) is arranged in a rear end region of the second roof part (102).

9. The folding top as claimed in one of claims 1 to 8, **characterized in that** a drivable base link (200) is mounted in a movable manner on the second roof part (102).

10. The folding top as claimed in claim 9, **characterized in that** the base link (200) forms the base of a roof-part four-bar mechanism (101c), a first roof-part link (101 a) and a second roof-part link (101 b) being provided in addition, and the first roof part (101) forming the connecting rod of the roof-part four-bar mechanism (101c).

11. The folding top as claimed in claim 10, **characterized in that** a control link (201) connects one of the roof-part links (101 a, 101 b) in an articulated manner to a main link (104, 105) of the folding top.

12. The folding top as claimed in one of claims 1 to 11, **characterized in that** the third roof part (103) is mounted on the second roof part (102) by means of a sliding guide.

13. The folding top as claimed in one of claims 1 to 12, **characterized in that** the first roof part (101), starting from a closed state of the folding top, can be pivoted about an imaginary rotational axis into an open position in which the first roof part (101) mainly covers an area behind, in the direction of travel, the second roof part (102) .

14. The folding top as claimed in one of claims 1 to 13, **characterized in that** the pivotable mounting of the second roof part (102) on the vehicle is achieved by means of a positively controlled link chain in a closed state of the folding top.

15. The folding top as claimed in one of claims 1 to 14, **characterized in that** all three roof parts (101, 102, 103) are deposited with exterior side upward when the folding top is in the open position.

## Revendications

1. Capote pour véhicule cabriolet, ladite capote comportant
une première pièce de toit (101), la première pièce de toit (101) portant sur un élément arrière ouvrant (110) lorsque la capote est fermée,
une deuxième pièce de toit (102) montée sur le véhicule de façon à pouvoir pivoter avec des bras (104, 105, 102a), la deuxième pièce de toit (102) étant placée en avant de la première pièce de toit (101), par référence au sens de roulement, lorsque la capote est fermée,
une troisième pièce de toit (103), la troisième pièce de toit (103) étant placée en avant de la deuxième pièce de toit (102), par référence au sens de roulement, lorsque la capote est fermée,
la première pièce de toit (101) pouvant être retirée de l'élément arrière (110),
la première pièce de toit (101) étant reçue de manière mobile par les bras (104, 105, 102a) de la deuxième pièce de toit (102), et
la première pièce de toit (1), lors de l'ouverture de la capote, pouvant initialement s'ouvrir autour d'un axe de rotation (112) dans le sens de roulement.

2. Capote selon la revendication 1, **caractérisée en ce que** la deuxième pièce de toit (102) reste en état initial pendant le décollage de la première pièce de toit (101) de l'élément arrière (110).

3. Capote selon la revendication 1 ou 2, **caractérisée en ce que** la troisième pièce de toit (103) est déplaçable au-dessus de la deuxième pièce de toit (102).

4. Capote selon l'une des revendications 1 à 3, **caractérisée en ce que** l'élément arrière (110) peut s'ouvrir en pivotant dans le sens opposé au sens de roulement.

5. Capote selon l'une des revendications 1 à 4, **caractérisée en ce que** la première pièce de toit (101) peut être retirée de l'élément arrière (110) dans une première portion d'un mouvement d'ouverture de la capote.

6. Capote selon l'une des revendications 1 à 5, **caractérisée en ce que** la première pièce de toit (101) repose de façon étanche depuis le haut sur l'élément arrière (110) lorsque la capote est fermée.

7. Capote selon l'une des revendications 1 à 6, **caractérisée en ce que** la troisième pièce de toit (103) peut être fixée de façon amovible à un cadre de pare-brise avant (107) du véhicule lorsque la capote est fermée.

8. Capote selon l'une des revendications 1 à 7, **caracterisée en ce que** l'axe de rotation (112) est placé dans une région d'extrémité arrière de la deuxième pièce de toit (102).

9. Capote selon l'une des revendications 1 à 8, **caractérisée en ce qu'**un bras de base (200), pouvant être entraîné, est reçu de façon mobile au niveau de la deuxième pièce de toit (102).

10. Capote selon la revendication 9, **caractérisée en ce que** le bras de base (200) forme la base d'un quadrilatère articulé de pièces de toit (101c), un premier bras de pièce de toit (101a) et un deuxième bras de pièce de toit (101 b) étant en outre prévus et la première pièce de toit (101) formant la bielle du quadrilatère articulé de pièces de toit (101c).

11. Capote selon la revendication 10, **caractérisée en ce qu'**un bras de commande (201) relie de façon articulée l'un des bras de pièce de toit (101 a, 101 b) à un bras principal (104, 105) de la capote.

12. Capote selon l'une des revendications 1 à 11, **caractérisée en ce que** la troisième pièce de toit (103) est reçue de façon mobile par la deuxième pièce de toit (102) par le biais d'un guide coulissant.

13. Capote selon l'une des revendications 1 à 12, **caractérisée en ce que** la première pièce de toit (101) peut s'ouvrir à partir de la capote fermée en pivotant dans le sens de roulement autour d'un axe de rotation (112) vers une position ouverte, la première pièce de toit (101) couvrant en majorité une région d'extrémité arrière de la deuxième pièce de toit (102).

14. Capote selon l'une des revendications 1 à 13, **caractérisée en ce que** le montage à pivotement de la deuxième pièce de toit (102) sur le véhicule est effectué au moyen d'une chaîne de bras fermée lorsque la capote est fermée.

15. Capote selon l'une des revendications 1 à 14, **caracterisée en ce que** toutes les trois pièces de toit (101, 102, 103) sont déposées avec le côté extérieur vers le haut lorsque la capote est ouverte.
